**Europäisches Patentamt**

(19) **European Patent Office**

**Office européen des brevets**

(11) Numéro de publication: **0 077 863**
**B1**

(12) **FASCICULE DE BREVET EUROPEEN**

(45) Date de publication du fascicule du brevet:
17.09.86

(51) Int. Cl.⁴: **G 06 F 13/42**

(21) Numéro de dépôt: **81430037.2**

(22) Date de dépôt: **28.10.81**

(54) **Dispositif de balayage de lignes de communications destiné à un contrôleur de communications.**

(43) Date de publication de la demande:
**04.05.83 Bulletin 83/18**

(45) Mention de la délivrance du brevet:
**17.09.86 Bulletin 86/38**

(84) Etats contractants désignés:
**DE FR GB IT**

(56) Documents cités:
**EP - A - 0 048 781**
**FR - A - 2 162 371**
**US - A - 3 623 010**
**US - A - 3 842 405**
**US - A - 4 016 548**
**US - A - 4 075 691**
**US - A - 4 188 665**

**IBM TECHNICAL DISCLOSURE BULLETIN, vol. 21, no. 7,**
**décembre 1978 NEW YORK (US) D.M. NAGEL et al.:**
**"Programmable communications subsystem having**
**controller incorporating microprocessor"**

(73) Titulaire: **International Business Machines Corporation,**
**Old Orchard Road, Armonk, N.Y. 10504 (US)**

(84) Etats contractants désignés: **DE GB IT**

(73) Titulaire: **Compagnie IBM FRANCE, 5 Place Vendôme,**
**F-75000 Paris 1er (FR)**

(84) Etats contractants désignés: **FR**

(72) Inventeur: **Brezzo, Bernard, 261 Avenue de Pessicart,**
**F-06100 Nice (FR)**
Inventeur: **Calvignac, Jean, Les Vallières, F-06610 La**
**Gaude (FR)**
Inventeur: **Dambricourt, Richard, C.E.R. -**
**sce 0928 B3 Compagnie IBM France, F-06610 La Gaude**
**(FR)**
Inventeur: **Masclet, André, Le Vauban - Bât.A Chemin du**
**Puy, F-06600 Antibes (FR)**
Inventeur: **Sanche, Jean-Pierre, 11 Chemin de**
**Guérande, F-06600 Antibes (FR)**

(74) Mandataire: **Lattard, Nicole, Compagnie IBM France**
**Département de Propriété Industrielle, F-06610 La**
**Gaude (FR)**

**Description**

Domaine Technique

La présente invention concerne un dispositif de balayage de lignes de communications destiné à un contrôleur de communications, et plus particulièrement un dispositif de balayage permettant le balayage d'un nombre de lignes variable sur lesquelles les vitesses de transmission des données sont différentes et assurant la commande de liaison de données dans tous les protocoles possibles.

Les contrôleurs de communications sont des dispositifs destinés à être incorporés dans une installation de télétraitement de données, de manière à gérer les transmissions sur les différentes lignes qui y sont rattachées. Généralement, la commande principale du réseau de télétraitement est concentrée dans une ou plusieurs unités de traitement centrales CPU contenant un répertoire des règles de traitement des données provenant de ou se dirigeant vers les stations terminales ou terminaux du réseau de télétraitement. L'envoi et la réception des données au travers des lignes de transmission sont gérés par des contrôleurs de communications placés sous la dépendance de la ou des unités centrales CPU. Mais outre l'exécution de commandes de transmission au sens strict du terme, le contrôleur est chargé d'exécuter des fonctions du répertoire, notamment des fonctions relevant directement des procédures standards de transmission. De ce fait, les unités centrales CPU sont libérées des tâches correspondantes et peuvent se consacrer à l'exécution d'autres travaux.

Le contrôleur de communications est un ensemble complexe ayant une intelligence qui est en majorité concentrée dans une ou plusieurs unités de commande centrales CCU. Les unités de commande centrales sont reliées d'une part aux terminaux au travers d'adaptateurs de lignes et d'autre part aux unités de traitement centrales CPU au travers d'adaptateurs de canaux ainsi désignés en raison du fait qu'ils sont connectés aux canaux de la ou des unités de traitement centrales.

Les adaptateurs de lignes peuvent desservir un certain nombre de lignes de transmission au moyen d'un dispositif de balayage cyclique, et d'un ensemble de mémoires à accès aléatoire, dans lesquelles sont stockés temporairement, les données reçues ou devant être envoyées sur les différentes lignes sous contrôle du dispositif de balayage.

Dans un tel environnement, chaque adaptateur de lignes peut être connecté à un nombre variable de lignes échangeant des informations avec des terminaux de différents types et en conséquence les protocoles et les vitesses de transmission des données sur ces lignes sont différents. Pour qu'un réseau de communications de données présente un maximum de souplesse il faut que dans les adaptateurs de lignes le même dispositif de balayage puisse être utilisé quel que soit le nombre de lignes à balayer et quels que soient les protocoles et vitesses de transmission sur ces lignes.

Généralement pour un contrôleur de communications donné, tel que le contrôleur IBM 3705, il est prévu différents types d'adaptateurs dont la conception dépend des caractéristiques des lignes qui lui sont connectées. Il est évident que cette solution est coûteuse et manque de souplesse car lorsque l'on veut changer la configuration du réseau, il faut changer le type d'adaptateur en fonction de chaque configuration.

Les brevets US-A-3 623 010 et US-A-4 016 548 sont relatifs à des contrôleurs de communications ou multiplexeurs en général.

Les documents suivants: IBM Technical Disclosure Bulletin, Vol 21, n° 7 de décembre 1978, pages 2639 à 2645 et brevet US-A-4 188 665 sont relatifs à un sous-système de communications programmable. Ce système comporte essentiellement une unité de commande, un dispositif de balayage de lignes (scanner) et un attachement de canal pour connecter le sous-système à l'unité de traitement centrale.

Le dispositif de balayage de lignes peut être connecté à un nombre de lignes qui dépend de la vitesse de transmission sur ces lignes et qui est au maximum de 32. Dans le cas de lignes à 9600 bits par seconde, il ne peut être connecté qu'à quatre lignes au maximum.

Cette limitation est due à la conception du dispositif de balayage qui est constitué d'une mémoire et d'un circuit logique de traitement qui travaille à la fréquence des bits et permet d'assembler ou de désassembler un caractère.

Des fils d'attente (queue) contiennent les caractères reçus des différentes lignes une fois assemblés.

En transmission une interruption à l'unité de commande est faite chaque fois qu'un caractère a été envoyé, et une file d'attente (queue) des demandes d'interruption est nécessaire.

L'adressage des lignes est réalisé au moyen d'une table de balayage ce qui nécessite de réécrire cette table lorsque la configuration de lignes est changée.

Il résulte de cette conception que les performances du dispositif de balayage sont limitées.

Un objet de la présente invention est donc de réaliser un dispositif de balayage de lignes qui puisse convenir au balayage de lignes de n'importe quel type et qui a des performances du point de vue vitesse améliorées.

Résumé de l'invention

La présente invention, telle qu'elle est revendiquée, concerne un dispositif de balayage de lignes destiné à travailler sous contrôle d'un microprocesseur associé à une mémoire de commande dans laquelle une zone de positions mémoire est affectée à chaque ligne, ledit dispositif de balayage et le microprocesseur étant destinés à faire partie d'un adaptateur de lignes pour un contrôleur de communications qui reçoit ou envoie des bits de message dans un protocole de transmission quelconque, sous forme série à des terminaux connectés aux lignes. Le dispositif de balayage comprend un premier moyen d'emmagasinage comportant une première et une seconde mémoires dans chacune desquelles une
zone est affectée à chaque ligne et qui peuvent
être lues et écrites simultanément et un second
moyen d'emmagasinage comportant une troisième mémoire dans laquelle une zone de positions d'emmagasinage est affectée à chaque ligne. La première mémoire est affectée à la fonction de service des bits, la seconde mémoire est
affectée à la fonction de service de lignes, et la
troisième mémoire est affectée à la fonction de
service des caractères. Ces moyens d'emmagasinage sont adressés par un moyen de contrôle et
d'adressage qui comporte des premier et second
compteurs d'adresses placés sous contrôle d'un
compteur de temps élémentaire, le premier compteur générant sur sa sortie, pendant le temps t,
donc au temps bit du balayage d'une ligne, l'information d'adresse des première et seconde mémoires, et le second compteur générant sur sa
sortie, pendant le temps nt et avec n égal au moins
à 4, donc au temps caractère, l'information
d'adresse de la troisième mémoire (A), la première mémoire recevant les informations
d'adresse destinées à la troisième mémoire (A) et
vice versa, respectivement aux temps spécifiques, et des moyens de commande recevant lesdites informations d'adresses et les informations
de temps élémentaires pour fournir sur les sorties
du moyen de contrôle et d'adressage les informations d'adresses et de commande de lecture/écriture des mémoires en des temps sélectionnés
pendant la période de balayage, et séquentiellement les adresses des lignes présentes balayées.
Un premier circuit logique de traitement et de
supervision fonctionnant au temps bit comprenant
des moyens de désérialisation/sérialisation des
bits, pour recevoir ou envoyer à chaque période
de balayage un bit de message; ce circuit étant
connecté d'une part aux lignes et d'autre part aux
première et seconde mémoires par un premier
bus de lecture et un premier bus d'écriture et à la
troisième mémoire par un second bus d'écriture
de façon que les informations dans les zones de
positions d'emmagasinage adressées des première et seconde mémoires puissent être lues,
traitées et ré-écrites modifiées ou non en fonction
du bit reçu ou à envoyer et de façon que les
caractères qui ont été assemblés des bits reçus
des lignes dans la première mémoire puissent
être transmis à la troisième mémoire.

Un second circuit logique de traitement et de
supervision fonctionnant au temps caractère comprenant des moyens d'assemblage de caractères
en demi-mot et désassemblage de demi-mot en
caractère connecté d'une part à la mémoire de
commande par un bus d'adresse et un bus de
données et d'autre part à la troisième mémoire
par un second bus de lecture et un troisième bus
d'écriture et à la première mémoire par le second
bus d'écriture pour échanger les messages en vol
de cycle entre la mémoire de commande et les
zones adressées des première et troisième mémoires.

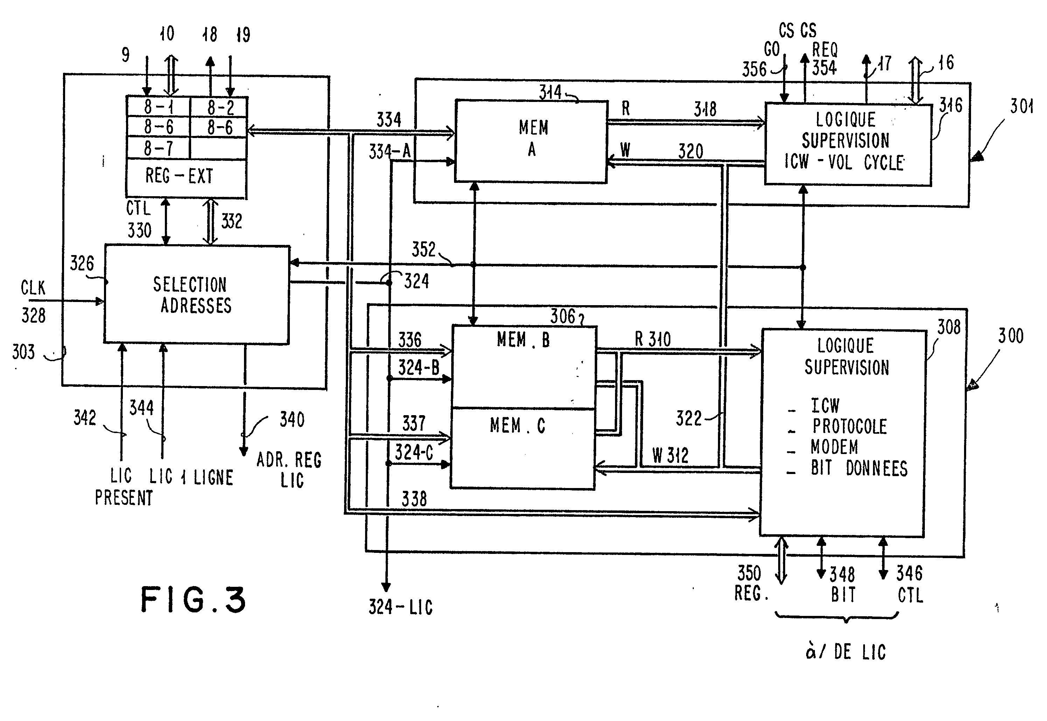

Brève description des figures
La figure 1 représente le schéma général d'un
contrôleur de communications dans lequel peut
être incorporée la présente invention.
La figure 2 représente un des adaptateurs de
lignes LA de la figure 1.
La figure 3 représente le dispositif de balayage
7 de la figure 2.
Les figures 4 et 5 représentent le schéma de
balayage des lignes dans deux configurations différentes de réseau.
La figure 6 représente le schéma d'une carte
d'interface de lignes LIC.
La figure 7 représente le dispositif de contrôle
et d'adressage 303 de la figure 3.
La figure 8 représente le diagramme de temps
du dispositif 301.
La figure 9 représente le compteur d'adresses
de lignes 501 de la figure 7.
La figure 10 représente le compteur d'adresses
502 de la figure 7.
La figure 11 représente les éléments du circuit
logique de surpervision 308 du dispositif 300 de la
figure 3, utilisées en réception.

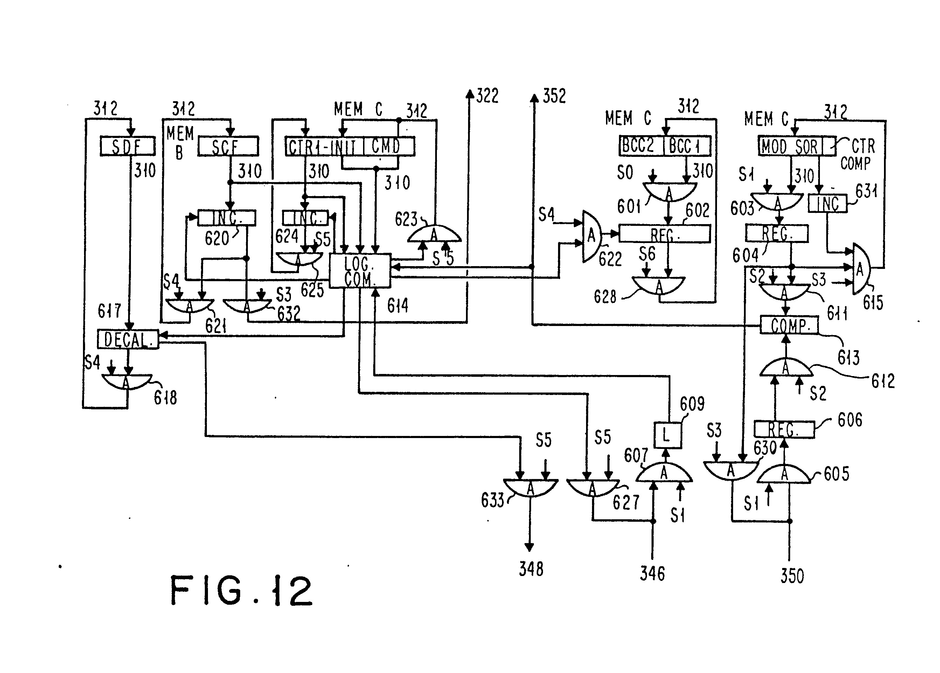

La figure 12 représente les éléments du circuit
logique de supervision 308 utilisés en émission.

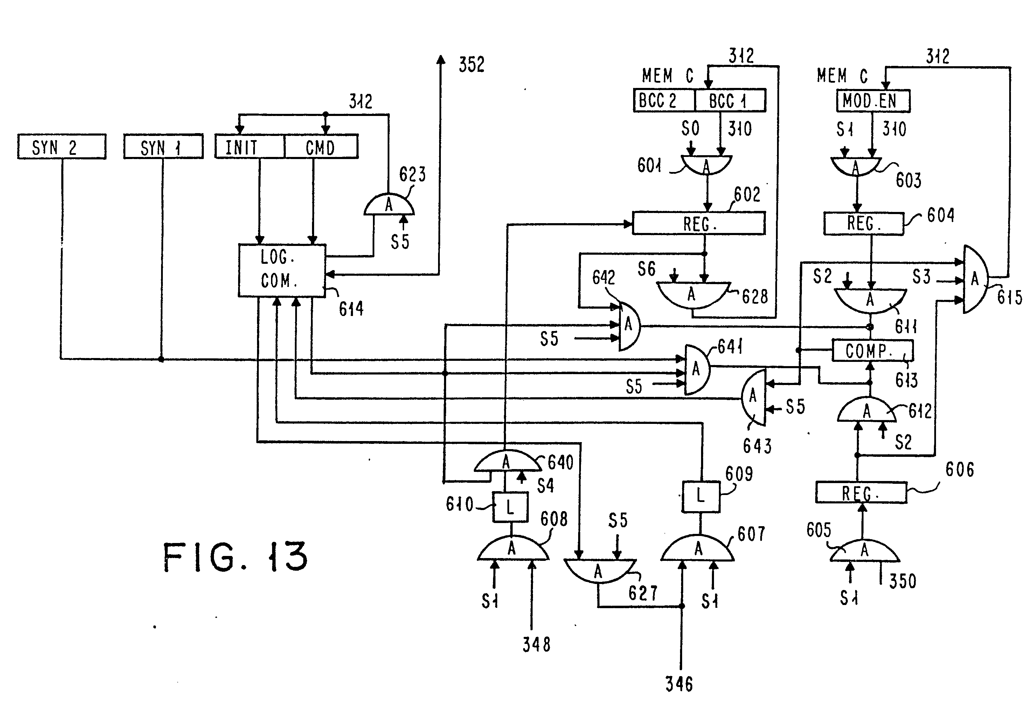

La figure 13 représente les éléments du circuit
logique de supervision 308 utilisés pour la recherche de synchronisation.

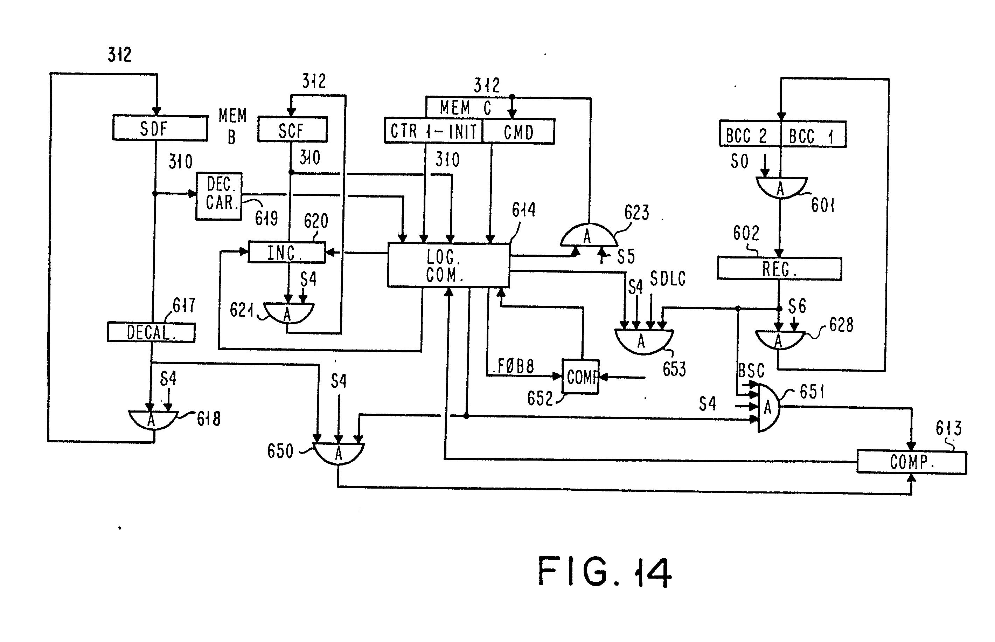

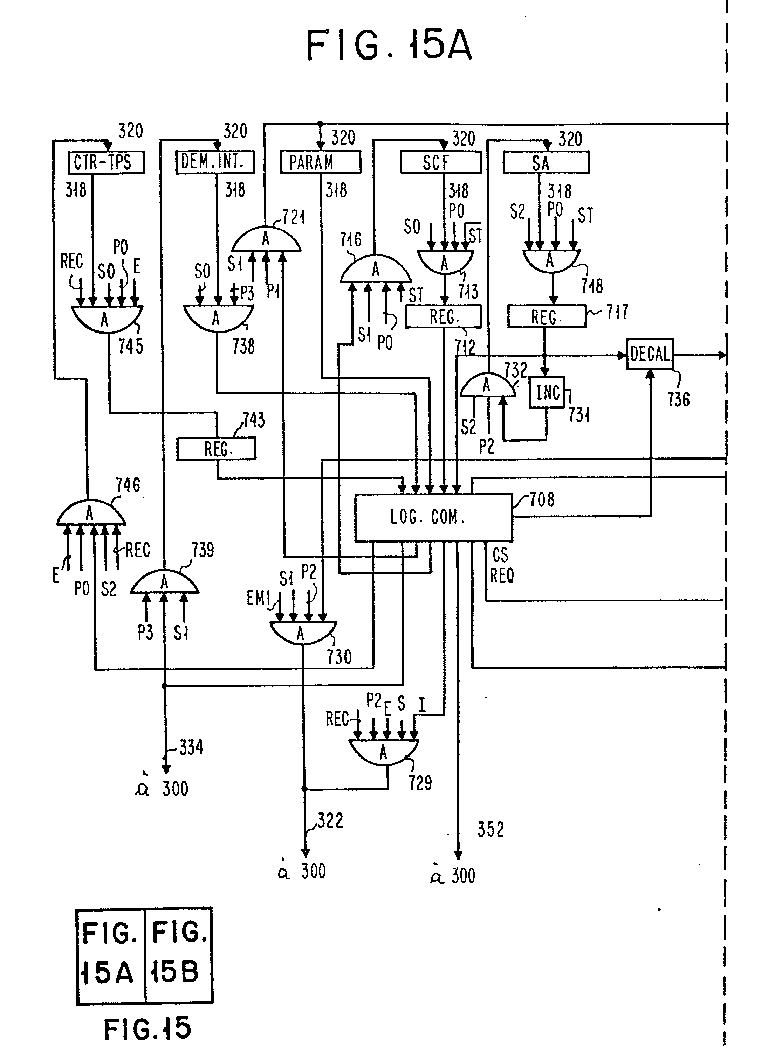

La figure 14 représente les éléments du circuit
logique de supervision 308 utilisés pour la vérification du CRC.

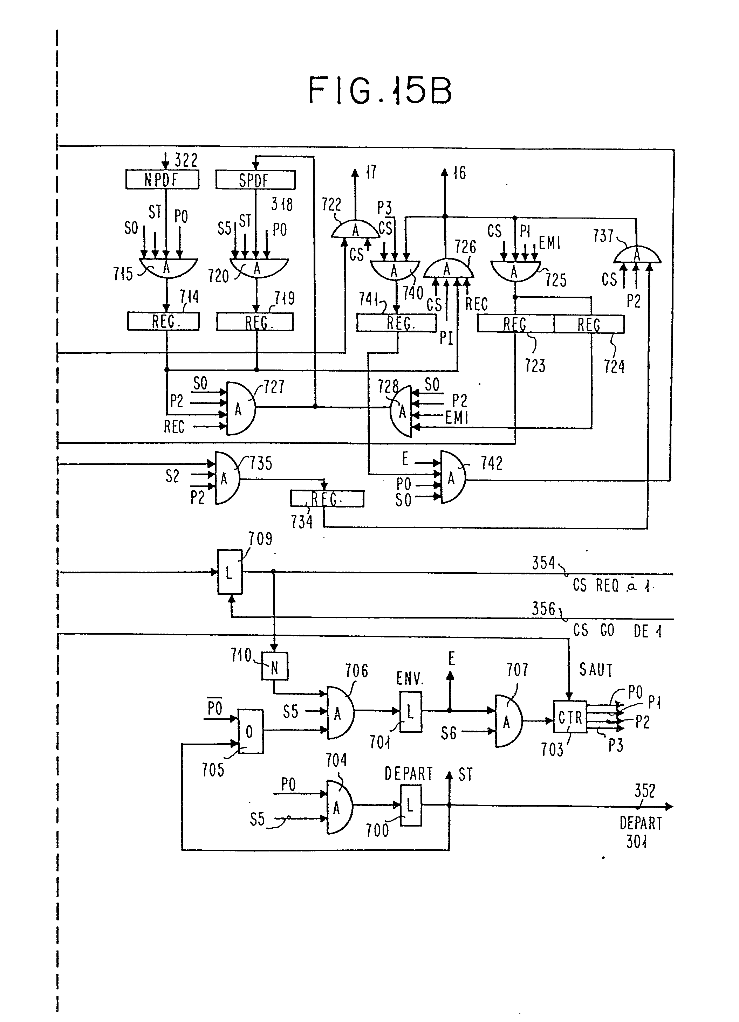

La figure 15 représente comment doivent être
assemblées les figures 15A et 15B, montrant le
circuit logique de supervision 316 du circuit 301 de
la figure 3.


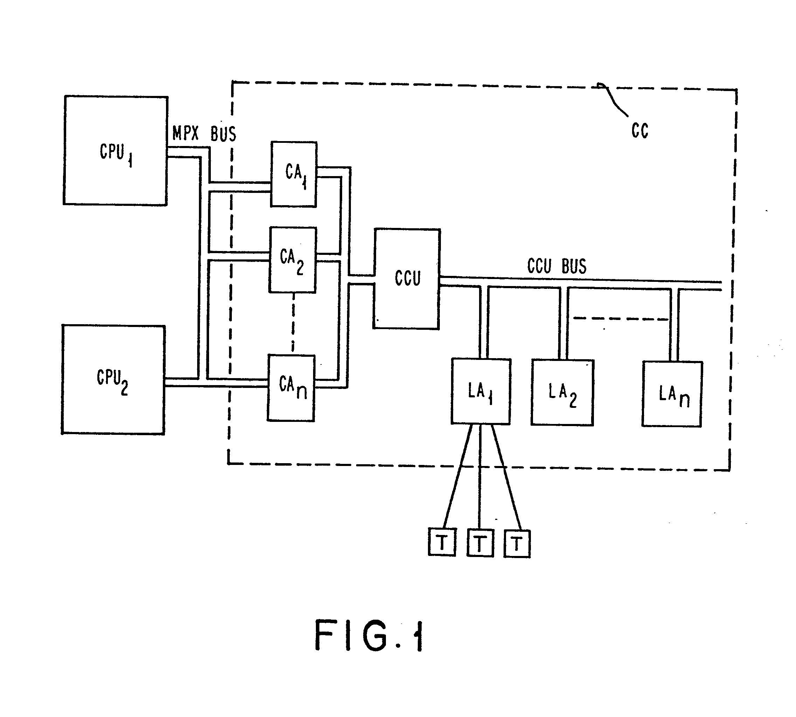

Description Détaillée de l'Invention
En référence à la figure 1 on va décrire à titre
d'exemple le schéma global d'un système dans
lequel peut être incorporée la présente invention.
Le contrôleur de communication CC est un élément d'un réseau de télétraitement dont on peut
trouver un exemple de configuration dans l'ouvrage «Téléinformatique» par G. Macchi et J.E.
Guilbert, notamment au chapitre 10. Dans le contrôleur de communication, l'unité centrale de
commande CCU gère les données transitant entre
les terminaux T et des unités centrales de traitement CPU1 et CPU2. L'unité CCU est reliée à des
canaux multiplex, MPX BUS, des unités centrales
de traitement CPU1 et CPU2 au travers d'adaptateurs de canaux CA1, ..., CAn. Elle est aussi reliée
aux terminaux T au travers d'adaptateurs de lignes LA1, ..., LAn connectées à un bus, CCU BUS.
Dans un tel environnement la présente invention concerne la réalisation d'un dispositif de balayage de ligne destiné aux adaptateurs de lignes,
réalisation qui est modulaire, c'est-à-dire que le
même dispositif peut être utilisé quel que soit le
nombre de lignes, les protocoles et vitesses de
transmission sur les lignes auxquelles il est connecté.

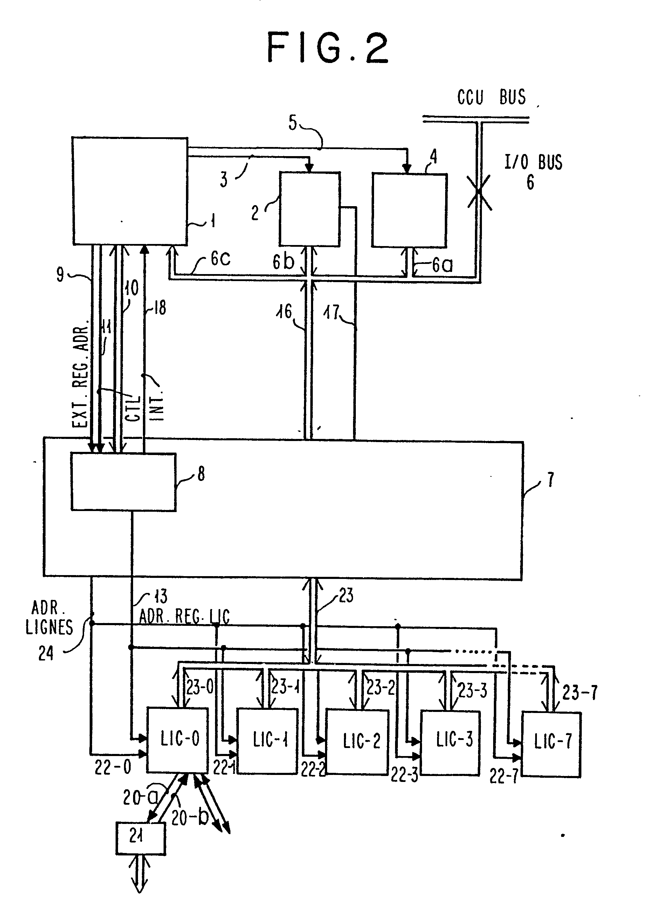

La figure 2 représente de façon schématique un adaptateur de lignes dans lequel peut être incorporé le dispositif de balayage de l'invention.

L'adaptateur représenté sur la figure 2 a été décrit dans la demande de brevet Européen EP-A-0 048 781 (date de dépôt 26.09.80, date de publication 07.04.82). Le dispositif de balayage de l'invention peut être utilisé dans cet adaptateur comme circuit 7.

L'adaptateur comprend un microprocesseur 1 associé à une mémoire de commande 2 comportant un espace pour l'emmagasinage du microcode de commande du microprocesseur et un espace pour l'emmagasinage de données. Cette mémoire est adressée par le microprocesseur par le chemin d'adressage 3. Le microprocesseur est aussi associé à une mémoire locale 4 qu'il adresse par le chemin d'adressage 5. Le bus d'entrée/sortie, I/O BUS 6 assure le transit des informations entre le bus CCU BUS du système de télétraitement et l'adaptateur de lignes par des opérations initialisées par programme (PIO) et des opérations initialisées par les adaptateurs (AIO). Le bus 6 est connecté à la mémoire locale 4 par un bus 6a, à la mémoire de commande par un bus 6b et au microprocesseur par un bus 6c.

Le dispositif de balayage de lignes 7 conforme à l'invention est connecté à l'ensemble microprocesseur-mémoires.

Des registres externes 8 qui peuvent être adressés par le microprocesseur par le chemin d'adressage 9, permettent au microprocesseur de communiquer avec le dispositif 7 par des opérations d'écriture ou de lecture dans les registres 8, sous contrôle de signaux de commande CTL sur la ligne 11. Ils sont écrits ou lus par le bus 10.

Comme il sera décrit par la suite, le dispositif de balayage comprend entre autres éléments un arrangement de mémoire dans lequel des zones sont affectées à chaque ligne.

Le dispositif de balayage conforme à l'invention communique avec la mémoire 2 du microprocesseur en mode connu sous le nom «vol de cycle» de façon à échanger les informations destinées à, ou venant des lignes à balayer et une position de la mémoire de commande 2 sélectionnée. Les données sont échangées par le bus 16 et l'adressage de la mémoire est réalisé par le chemin 17. Un chemin d'interruption 18 est aussi prévu pour interrompre le microprocesseur dans certaines conditions reportées dans un des registres externes.

L'adaptateur est relié aux lignes de communication, une ligne comportant deux interfaces, un interface d'émission et un interface de réception 20a et 20b, si elle est bi-directionnelle, et un interface utilisé soit en réception soit en émission si elle est uni-directionnelle, pour recevoir et transmettre les informations vers le terminal éventuellement par l'intermédiaire d'un modem 21. Des circuits d'interfaces de lignes LIC, 22-0 à 22-7 sont placés entre le dispositif de balayage 7 et les lignes, cinq circuits sont représentés sur le dessin, dans un mode de réalisation préféré il peut y en avoir jusqu'à huit. Ces circuits d'interfaces sont connectés au dispositif de balayage 7 par des bus 23-0 à 23-7 respectivement. Il comprend des circuits d'attaque et de réception de ligne, et des registres pour stocker temporairement les bits de données reçus ou à transmettre sur les lignes auxquelles ils sont connectés. Les registres sont adressés sous contrôle du dispositif 7, par le bus d'adressage 13, et les LIC sont adressés par le bus d'adresses 24.

Les données peuvent être reçues ou transmises suivant différents protocoles par exemple SDLC (Synchronous Data Link Control), BSC (Binary Synchronous Communication) et arythmique S/S (Start/Stop). Pour chacun des différents protocoles on définit des paramètres de transmission tels que longueur de caractères pour les protocoles S/S et BSC, longueur du code arrêt pour le protocole S/S, longueur et type des caractères de contrôle CRC (Cyclic Redondancy Code), etc.

La communication entre le dispositif de balayage et le microprocesseur se fait suivant deux modes qui sont résumés dans ce qui suit: un mode asynchrone qui implique l'intervention du microcode dans la mémoire 2 et un mode synchrone indépendant du microcode. Le mode asynchrone est utilisé pour réaliser trois types d'opérations.

1 – Phase d'initialisation

La phase d'initialisation, est la phase au cours de laquelle a lieu la définition d'un réseau de télétraitement. Le système étant placé dans le mode d'initialisation, les paramètres caractéristiques de chaque ligne du réseau sont stockés dans les mémoires du dispositif de balayage. Pour cela, chaque zone de positions mémoire affectée à chaque ligne particulière reçoit par l'intermédiaire des registres externes, dans un champ donné, les paramètres d'initialisation caractérisant la ligne. Les champs restants sont affectés au stockage des données, de leurs paramètres de contrôle et de leurs informations d'état caractérisant les conditions d'achèvement d'un échange de données. Au cours de cette phase, les mémoires du dispositif de balayage sont personnalisées en fonction de la configuration.

2 – Gestion des fils d'interface de contrôle avec le modem

Les fils de contrôle (non représentés sur la figure 2) sont associés aux lignes 20a, 20b, sur ces fils transitent les signaux de contrôle de la liaison. Pour traiter les signaux de contrôle sur ces fils il n'est pas nécessaire d'avoir des performances optimum mais un maximum de souplesse est souhaitable de façon à pouvoir gérer différents types de modems et de procédures qui sont connus actuellement ou qui pourraient être développés dans le futur.

Les informations de commande allant au modem sont envoyées par le microcode en mode asynchrone au moyen des dispositifs 10, 9 et registres 8 et sont également stockées dans un registre que l'on appelera «modem sortie». A chaque période de balayage de la ligne correspondante la configuration sur ces fils est comparée avec la configuration sur les circuits d'attaque de ligne obtenue par des circuits de réception locaux par l'intermédiaire d'un masque déterminé par le microcode. Tout désaccord entre les deux configurations engendre une condition d'erreur «Vérification circuits d'attaque». Ainsi on vérifie les circuits d'attaque du modem concerné.

A chaque période de balayage, les informations sur les fils venant du modem sont stockées dans un registre «modem entrée» et sont comparées avec les informations «modem entrée» conservées dans les mémoires du dispositif de balayage aux emplacements correspondantes aux lignes à balayer. Cette opération de comparaison est déclenchée par le microcode et est réalisée par l'intermédiaire d'un masque déterminé par le microcode. Un désaccord entre les deux configurations engendre une demande d'interruption et interrompt la comparaison jusqu'à ce que le microcode la reprenne. Ceci empêche que plusieurs interruptions se produisent dans le cas d'un changement permanent sur des fils de contrôle du modem dû à des conditions d'erreurs erratiques.

3 – Traitement des demandes d'interruption

Le mode synchrone est utilisé pour le transfert d'informations par vol de cycle directement dans la mémoire de commande 2 du microprocesseur par le chemin 16. Les informations: données, paramètres de contrôle, informations d'état associées sont transférées depuis/dans la mémoire 2 sans intervention du microcode.

La partie de la mémoire 2 réservée à cet effet a été divisée en zones mémoires, une zone étant affectée à chaque ligne.

L'échange de données par vol de cycle est une opération bien connue, elle est réalisée par l'intermédiaire de commandes générées par le microprocesseur 1. Le dispositif 7 peut accéder à la mémoire 2 lorsque le microprocesseur a répondu à une demande de vol de cycle par un signal «vol de cycle accordé». L'adressage de la mémoire 2 est réalisé par le chemin 17 et le transfert des données par le bus 16.

Le dispositif de balayage 7 de la présente invention est représenté schématiquement sur la figure 3.

Il se compose de deux dispositif de traitement de données 300 et 301. Le premier dispositif 300 est connecté aux circuits d'interface de lignes LIC 22 pour sérialiser et désérialiser les bits reçus et à transmettre et assurer la supervision des différents protocoles de transmission utilisés et le traitement de fils d'interface de contrôle des modems connectés aux LIC. Le second dispositif 301 connecté au microprocesseur 1 de la figure 2 par le bus de données 16 et le bus d'adressage 17 assemble les caractères en demi-mot et désassemble les demi-mots en caractères et assure les échanges avec la mémoire du microprocesseur en vol de cycle. Il assure le rangement dans la mémoire des données reçues ou à transmettre, donne au microprocesseur l'information d'état résultant des opérations effectuées et assure le mécanisme d'interruption au microprocesseur.

Ces deux dispositifs de traitement sont placés sous la commande d'un dispositif de contrôle et d'adressage 303.

Le processeur 300 comporte un ensemble 306 de deux mémoires B et C qui peuvent être lues et écrites simultanément et un circuit logique de supervision 308 qui fait les fonctions de sérialisation/désérialisation, de contrôle des modems et de supervision des différents protocoles utilisés. Sous contrôle de signaux de commande de lecture et d'écriture (sur la ligne 352), il provoque la lecture d'un emplacement adressé par le dispositif 303 et le transfert des informations lues sur le bus R 310 à une destination qui dépend de l'opération réalisée, et la ré-écriture dans ce même emplacement de données modifiées ou non suivant le type d'opération par le bus W 312.

Le dispositif 301 comprend une mémoire A 314 et un circuit logique de supervision 316. De la même façon que pour le dispositif 300, la lecture et l'écriture dans les emplacements adressés de la mémoire A 314 sont contrôlées par des signaux générés sur la ligne 352 par le dispositif 316, les données lues passent sur le bus R 318 et les données à écrire par le bus W 320.

Les circuits logiques 316 et 308 peuvent provoquer l'écriture des mémoires A, B et C par l'intermédiaire de la ligne 322.

Les informations d'adresses sont générées par le dispositif 303 sur la ligne 324, pour adresser les mémoires A, B et C et les lignes sur les circuits LIC, par l'intermédiaire des lignes 324-A, 324-B, 324-C et 324-LIC.

Le dispositif de contrôle et d'adressage 303 comprend les registres externes 8 du microprocesseur 1, qui constituent les moyens pour que le microprocesseur communique avec le dispositif de balayage 7, et un dispositif de sélection d'adresse 326. Ce dispositif 326 sous contrôle d'une horloge CLK 328 commande l'adressage séquentiel des mémoires A, B et C en mode de balayage normal. Ce balayage peut être interrompu par un signal de contrôle sur la ligne 330 transmis par le microprocesseur par un registre externe et l'adressage des mémoires est réalisé à ce moment à partir des informations contenues dans un des registres externes 8 par l'intermédiaire de la ligne 332. C'est ce mode d'adressage qui est utilisé pendant la phase d'initialisation. Les données sont transférées des registres externes 8 aux mémoires A, B et C aux emplacements adressés par le dispositif de sélection d'adresse 326, par les bus 334, 336 et 337. Le bus 338 permet de transférer des données entre les registres externes et les registres situés dans les circuits LIC par l'intermédiaire du circuit logique 308. L'adressage des registres des circuits LIC est réalisé par le circuit 326 et le signal d'adressage est généré sur la ligne 340. Les lignes 342 et 344 amènent au circuit 326 des signaux indiquant la présence de circuits LIC et le type de circuit LIC, c'est-à-dire s'il permet de connecter une seule ligne ou plus de façon que les cycles de balayage puissent être adaptés à la configuration du réseau, d'une manière qui sera décrite ultérieurement.

Le circuit logique 308 communique avec les LIC par les lignes de commande CTL 346, d'échange de bit de données 348 et transfère dans les registres des LIC 350. Une ligne de commande 352 permet d'envoyer des commandes aux dispositifs de traitement 300, 301, 303.

Dans un mode de réalisation préféré, le dispositif de balayage permet de connecter de 1 à 32 lignes bi-directionnelles de transmissions de données.

Le balayage s'effectue séquentiellement. L'intervalle de temps entre deux balayages d'une ligne doit être plus court que l'intervalle de temps séparant deux bits transmis ou reçus. La vitesse maximum de balayage du dispositif de l'invention est de 350 000 bits reçus et émis par seconde (transmission quatre fils dite bidirectionnelle). Cette puissance de balayage se répartit automatiquement entre le nombre de lignes connectées. S'il y a une ligne, elle pourra fonctionner à 256 000 bits/seconde, s'il y a quatre lignes elles pourront fonctionner à 64 000 bits/seconde et s'il y a trente-deux lignes elles pourront fonctionner à 9600 bits. Comme on l'a dit précédemment les lignes sont connectées au dispositif de balayage 7 par l'intermédiaire des circuits d'interface LIC 22. A chaque LIC peuvent être connectées une ou quatre lignes. Il peut y avoir un à huit circuits LIC disposé chacun sur une carte dite carte LIC connectés à un dispositif de balayage 7. Le nombre de circuits LIC connectés modifie automatiquement le balayage de lignes. C'est la fonction des lignes 342 et 344. La ligne 342 «LIC PRESENT» permet au circuit 303 de connaître le nombre de circuits LIC installés, la ligne 344 «LIC 1 ligne» indique que le circuit LIC installé est relié à une ligne seulement. Les circuits LIC doivent donc être installés dans l'ordre 0 à 7 sans intervalle vide. Ces lignes conditionnent le balayage des lignes qui est toujours effectué dans l'ordre suivant. La première ligne (ligne 0) du premier LIC, la première ligne du deuxième LIC, etc., la première ligne du dernier LIC installé, puis la deuxième ligne (ligne 1) du premier LIC, la deuxième ligne du troisième LIC, etc., la deuxième ligne du dernier LIC installé, puis la troisième ligne (ligne 2) du premier LIC, etc., la troisième ligne du dernier LIC installé, et finalement la quatrième ligne (ligne 3) du premier LIC, etc., la quatrième ligne du dernier LIC installé, et l'on revient à la première ligne du premier LIC. Si sur un circuit LIC il n'y a qu'une ligne, elle sera balayée quatre fois plus souvent que les autres lignes.

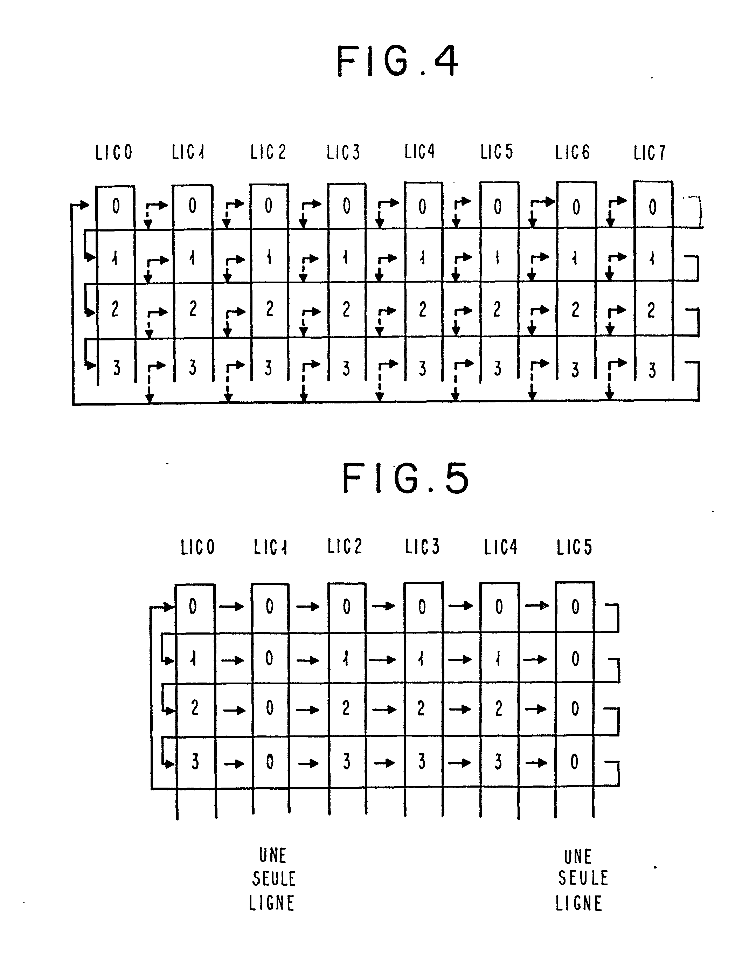

Le schéma de balayage est représenté sur les figures 4 et 5. La figure 4 représente le schéma de balayage lorsque tous les LIC, LIC 0 à LIC 7 sont connectés à quatre lignes (lignes 0 à ligne 3) et la figure 5 représente le schéma de balayage lorsqu'il y a six LIC parmi lesquels les LIC 1 et 5 ne sont connectés qu'à une seule ligne. On voit bien que la ligne 0 de ces cartes LIC 1 à LIC 5 est balayée quatre fois plus souvent.

Cette disposition a été utilisée dans le mode de réalisation préféré de l'invention. Il est bien entendu que les nombres de lignes peuvent être changés sans sortir du cadre de l'invention.

Sur la figure 3 on a représenté les lignes de commande et d'adressage avec un seul fil par opposition aux lignes de données mais il est bien évident que les lignes de commande peuvent être à plusieurs fils, par exemple chaque LIC connecté au circuit 7 a un fil «LIC présent» et «LIC 1 ligne».

Dans les mémoires A, B, C 314 et 306, à chaque ligne sont associés deux mots de commande d'interface ICW, (répartis en demi-mot HW 1 à 4, un pour l'interface «transmission» et un pour l'interface «réception». Ces mots de commande ont les formats suivants:

Mémoire B de l'ensemble 306

| HW ↓ | Interface Réception | | HW ↓ | Interface Emission | |
|---|---|---|---|---|---|
| | Octet 0 | Octet 1 | | Octet 0 | Octet 1 |
| 1 | SDF | SCF | 1 | SDF | SCF |
| 2 | PDF | PCF | 2 | PDF | PCF |
| 3 | – | – | 3 | DLE | – |
| 4 | Synchro 2 | Synchro 1 | 4 | | Synchro |

La mémoire B est affectée à la fonction de service des bits de données.

SDF (Champ de donnée série)
est donc un champ dans lequel les données sont amenées en série à partir de la ligne pour l'interface réception. Pour l'interface émission, les données dans cet emplacement sont transmises bit à bit.

PDF (champ de donnée parallèle)
En réception les données sérialisées dans le champ SDF passent dans le champ PDF une fois le caractère assemblé. En transmission les données placées dans ce champ passent dans SDF pour être transmises en série bit à bit.

SCF (champ de contrôle)
est un champ de contrôle associé au champ SDF pour contenir des informations de contrôle.

PCF (champ de contrôle)
est un champ de contrôle associé au champ PDF pour contenir des informations de contrôle.

Synchro 2, Synchro 1

sont des caractères à reconnaître pour assurer la synchronisation en ligne.

DLE

En mode BSC c'est un caractère à envoyer automatiquement en ligne.

Mémoire C

| | Interface Réception | | Mode S/S | Interface Emission | |
|---|---|---|---|---|---|
| HW ↓ | Octet 0 | Octet 1 | HW ↓ | Octet 0 | Octet 1 |
| 1 | Mode Initialisation | Commande | 1 | Mode Initialisation | Commande |
| 2 | – | – | 2 | – | – |
| 3 | Configuration Modem-Entrée | Masque | 3 | Modem Sortie Immédiate | Masque |
| 4 | – | – | 4 | Modem Sortie Empilé | Masque |

Mode SDLC et BSC
(SDLC: Synchronous Data Link Control
 BSC: Binary Synchronous Communication)

| HW ↓ | | | HW ↓ | | |
|---|---|---|---|---|---|
| 1 | Mode Initialisation | Commande | 1 | Mode Initialisation | Commande |
| 2 | BCC2 | BCC1 | 2 | BCC2 | BCC1 |
| 3 | Configuration Modem-Entrée | Masque | 3 | Modem-Sortie Immédiate | Masque |
| 4 | – | – | 4 | Modem-Sortie Empilée | Masque |

La mémoire C est affectée à la fonction de service de ligne.

Le champ Mode d'Initialisation est utilisé en phase d'initialisation pour emmagasiner les protocoles de lignes.

Les configurations Modem-Entrée; Modem-Sortie Immédiate et Modem-Sortie Empilée; Masque sont utilisés pour la gestion des fils de contrôle des modems sur lesquels sont transmis les signaux de contrôle associés à la ligne.

BBC1 et BBC2 sont les caractères du Code Cyclique Redondant.

Mémoire A

| | Interface Réception | | | Interface Emission | |
|---|---|---|---|---|---|
| HW ↓ | Octet 0 | Octet 1 | HW ↓ | Octet 0 | Octet 1 |
| 1 | Nouveau PDF | SCF | 1 | Compteur CTR Insertion Synchron. | SCF |
| 2 | PDF suivant SPDF | Demande Interruption | 2 | PDF suivant SPDF | Demande Interruption |
| 3 | Adressage mémoire de commande 2: SA | | 3 | Adressage mémoire de commande 2: SA | |
| 4 | Paramètre Commande 301 | Compteur de temps CTR TPS | 4 | Paramètre Commande 301 | |

La mémoire A est affectée à la fonction de service de caractère.

Compteur de temps CTR TPS.

Il peut compter des temps variant de 2ms à 3s.

Il peut être utilisé par le microprocesseur pour générer une interruption au bout d'un temps fixé. Il est aussi utilisé en BSC pour contrôler la réception des caractères de synchronisation, et, en transmission, pour insérer ces mêmes caractères toutes les secondes à condition que le bit Insertion Synchronisation soit présent.

Les deux dispositifs de traitement 300 et 301, se répartissent les tâches de façon optimale. Pour ce faire le dispositif de traitement 300 travaille au temps bit et le dispositif 301 travaille au temps caractère (octet) donc huit fois moins rapidement que le dispositif 300. La répartition des fonctions est faite de façon à pouvoir utiliser dans chacun des deux dispositifs 300 et 301 les mêmes éléments pour faire des fonctions différentes. Cette répartition des fonctions sera détaillée par la suite.

Quatre registres de l'ensemble de registres 8 sont affectés à la gestion de l'accès en lecture ou écriture aux positions dans les mémoires A, B, C et dans les LIC.

Le premier registre 8-1 (bits 2 à 7 + parité) est chargé par le micro-code de commande du microprocesseur pour déterminer l'adresse de la ligne (bits 2 à 6) et le type d'interface (bit 7 = 0 pour interface émission et bit 7 = 1 pour interface réception).

Le second registre 8-2 (bit 0 à 7 + parité) est le registre intermédiaire de données. En opération d'écriture, il est chargé par le microcode avec les données à transférer. En opération de lecture, le micro-code peut trouver les données à lire dans ce registre, à la fin de l'opération.

Le troisième registre 8-3 (bits 0 à 5 + parité) est chargé par le micro-code pour spécifier l'opération à réaliser (lecture ou écriture, zone de mémoire à accéder), et déclencher cette opération à un temps spécialement aménagé pour permettre le transfert des données sans perturber le fonctionnement synchrone en vol de cycle du dispositif 7.

L'organisation du registre 8-3 est la suivante:

Bit 0: 0 = lecture, 1 = écriture
Bits 1, 2: 00 = opération sur la mémoire B
01 = opération sur la mémoire A
10 = opération sur la mémoire C
11 = opération sur les LIC
Bit 3: si bits 1, 2 ≠ 11
0 = opération sur l'octet 0 (pair)
1 = opération sur l'octet 1 (impair)
si bits 1, 2, = 11
0 = opération sur les LIC
Bits 4, 5: si bits 1, 2 ≠ 11
Les bits 4, 5 spécifient le demi-mot dans les mémoires auxquelles il faut accéder dans les champ affecté à l'interface de ligne chargé dans 8-1.
si bits 1, 2 = 11,
les bits 4, 5 spécifient le registre dans les LIC.

Le registre 8-4 donne l'état de l'opération d'accès par le microprocesseur.

Bit 0 actif: opération non terminée
Bit 1 actif: une erreur s'est produite
Bit 4 actif: une erreur s'est produite lors de l'adressage d'un LIC
Bit 5: l'erreur s'est produite à l'intérieur du dispositif 7.

Les registres 8-5 et 8-6 constituent les registres d'interruption. Lorsque le dispositif de balayage envoie au microprocesseur une interruption il charge ces registres pour fournir au micro-code l'information nécessaire relative à l'interruption.

L'adresse de l'interface qui a demandé l'interruption se trouve dans le registre 8-5 dont les bits 0-7 ont la signification suivante:

Bits 2-6 adresse de la ligne
Bit 7 détermine l'interface
= 0 émission
= 1 réception
Bits 0, 1 = 11
signifie que des informations complémentaires peuvent être trouvées dans le registre 8-6. Si non bit 0, 1 = 00.

Ce registre ne peut pas être écrit par le micro-code.

La cause de l'interruption peut être trouvée dans le registre 8-6 dont les bits ont la signification suivante:

Si l'interruption signale simplement qu'une fin de zone est atteinte (comme cela sera expliqué par la suite) il n'y a pas d'information complémentaire dans ce registre les bits 0 et 1 du registre 8-5 sont à 00.

Dans les autres cas la cause de l'interruption est définie de la façon suivante:

Bit 0 = 0, bit 7 = 1 signifie que l'information est une information de travail normal, dans ce cas:

– Pour un interface Réception
Bit 1: Dépassement de capacité (overun)
Bit 3: Changement état modem
Bit 4: Indique au microcode qu'une condition d'achèvement a été chargée dans l'état du cycle volé.
– Pour un interface Emission

Bits 1, 4 = 00 pas d'information
01 fin de transmission
10 manque de caractère (under run)
11 séquence caractère invalide (BSC)
Bit 2 = expiration du temps (time out)
Bit 3 = changement état modem

Lors de la mise sous-tension une commande de remise à 0 est automatiquement reçue du microprocesseur par la ligne CTL 11 et un registre externe 8-7 et transmise aux dispositifs de traitement 300 et 301 par la ligne 330 pour balayer séquentiellement les mémoires et les effacer ainsi que les registres des LIC. Aucun balayage de ligne n'a lieu. Cet état «balayage bloqué» est maintenu par le bit 2 du registre externe 8-7, qui est mis à 1 à la fin de l'effacement des mémoires. Par la suite, pour démarrer le balayage, le microprocesseur devra restaurer ce bit.

Le microprocesseur entre dans la phase d'initialisation au cours de laquelle les mots ICW sont écrits dans les mémoires A, B et C, et les registres de LIC chargés, par l'intermédiaire des registres externes 8-1, 8-2, 8-3 pour préparer chaque interface de ligne aux tâches qu'il aura à effectuer.

Le microprocesseur, une fois cette phase terminée vient lire le registre 8-4 ce qui lui indiquera quand l'opération sera terminée et dans quelles conditions (avec ou sans erreur) le bit 0 de ce registre est mis à 1 au début de l'opération et passe à 0 lorsque l'opération est terminée.

Les informations du mode d'initialisation sont les suivantes:

Pour les mots ICW de la mémoire A: l'adresse du premier demi-mot de la zone de mémoire 2 réservée à cet interface dans le demi-mot 3 «adresse mémoire de commande» et le paramètre relatif à ce demi-mot indiquant les conditions d'utilisation.

Pour les mots ICW de la mémoire C: le type de protocole de ligne à utiliser et éventuellement la commande à envoyer au modem.

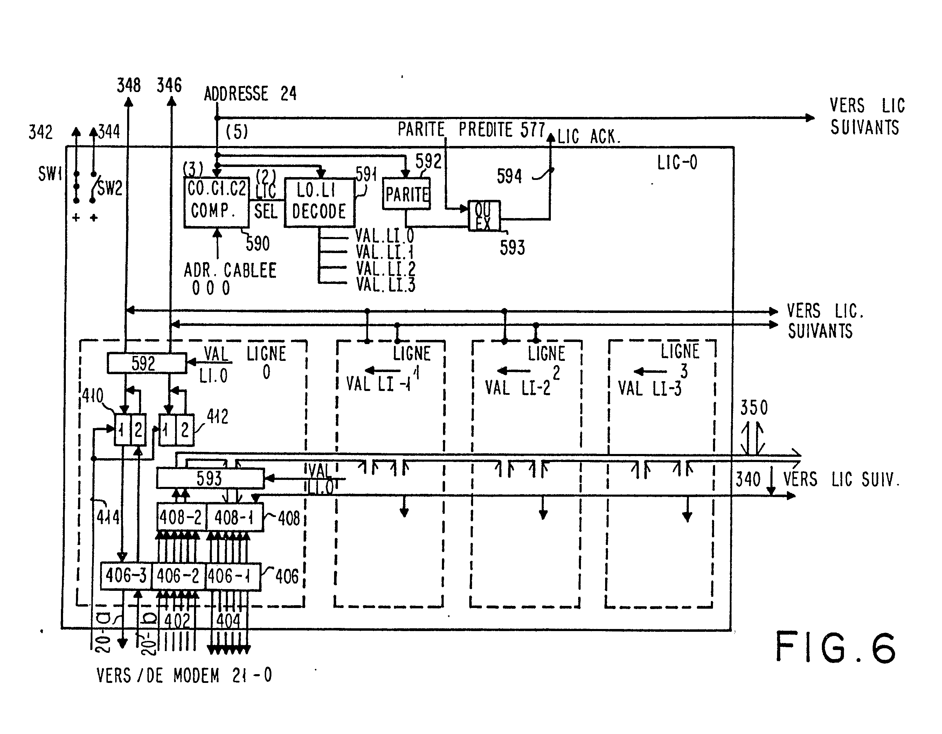

Avant de passer à la description du fonctionnement du circuit de la figure 3 on va donner en référence à la figure 6, le schéma général d'un circuit d'interface LIC.

On a représenté sur la figure 6 un des circuits d'interface LIC.0 auxquels sont connectées quatre lignes de transmission par l'intermédiaire des modems 21-1 à 21-4. Ces circuits sont situés sur une carte, c'est pourquoi dans la suite on parlera indifféremment de circuits ou de cartes LIC.

On ne décrira que le circuit concernant la ligne 0 assurant la connexion du modem 21-0 au dispositif de balayage, ce circuit étant le même pour tous les modems.

Les bits de données arrivent au modem par l'interface d'émission 20-a et sont reçus du modem par le dispositif de balayage par l'interface de réception. Deux séries de fils de contrôle 402 et 404 permettent d'échanger les signaux de contrôle associés aux interfaces, signaux fixés par les différents Standards. Les fils 20-a et 20-b, 402 et 404 arrivent à un ensemble 406 de récepteurs/circuits d'attaque. Les récepteurs 406-2 reçoivent les signaux de contrôle 402 et les circuits d'attaque 406-1 envoient les signaux 404 au modem. Le circuit 406-3 comprend un récepteur pour le fil d'interface 20-b et un circuit d'attaque pour le fils d'interface 20-a.

Les deux registres 408-1 et 408-2 sont les registres des LIC qui peuvent être adressés par la ligne d'adressage 340. Le registre 408-2 reçoit les informations des récepteurs 406-2, qui correspondent à la configuration «modem entrée» et il peut être lu et son contenu transmis au dispositif de balayage 7 par le bus 350 commun à tous les circuits LIC. Le registre 408-1 transmet les informations configuration modem-sortie aux fils 404 par les circuits d'attaque 406-1. Il peut être écrit et lu par le dispositif de balayage par le bus 350.

Deux bascules à verrouillage 410-1 et 410-2 sont enclenchées par l'horloge du modem H ou d'une horloge externe pour les lignes qui ne sont pas connectées à un modem sur la ligne 414 afin d'emmagasiner au temps bit les bits à transmettre et les bits reçus. Le bit à transmettre vient de la ligne 348 et est stocké dans la bascule 410-1 et le bit reçu vient de l'interface 20-b et est stocké dans la bascule 410-2. Il est transmis au dispositif de balayage par la ligne 348.

A ces bascules 410-1 et 410-2 sont associées deux bascules de service 412-1 et 412-2. Ces bascules sont déclenchées par l'horloge du modem quand on met un bit dans les bascules 410, pour indiquer qu'un bit est prêt à être reçu ou envoyé et elles sont restaurées par le dispositif de balayage quand ces bits ont été traités. Ces bascules fournissent les signaux de commande de service de bit CTL sur la ligne 346.

Chaque carte LIC comporte les deux indications «LIC présent» et «LIC 1 ligne» sur les fils 342 et 344. Sur ces lignes, sont générés des signaux au niveau haut par l'intermédiaire des commutateurs SW1 et SW2, connectant ces lignes à une tension positive, lorsque la carte LIC est présente dans le réseau, et lorsque cette carte n'est connectée qu'à une seule ligne.

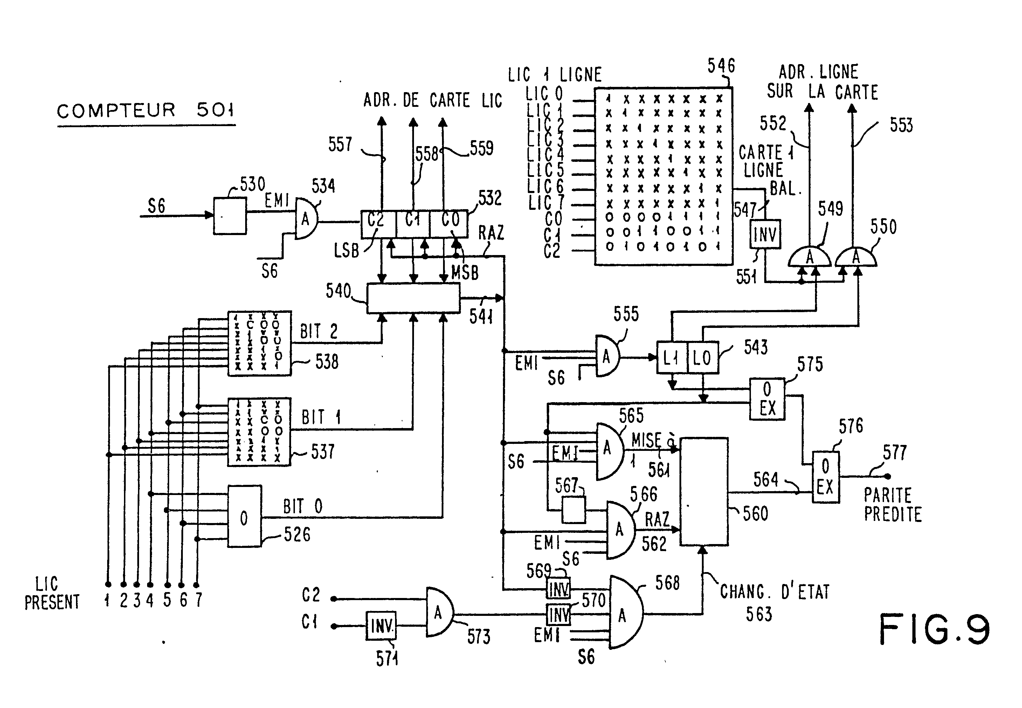

Sur chaque carte LIC, se trouve un circuit de décodage d'adresse, comprenant un comparateur COMP. 590 qui reçoit l'adresse de LIC générée par le dispositif de sélection d'adresses 326 de la façon qui sera décrite en référence à la figure 9 et l'adresse câblée de la LIC par exemple 000 pour la LIC 0. Il fournit en sortie un signal LIC sélecté LIC SEL, lorsque le comparateur détecte une égalité. Un circuit de décodage 591 reçoit les bits d'adresse de lignes sur la LIC L0 et L1 (généré par le circuit de la figure 9) et fournit des signaux de validation d'adresses de lignes VAL LI.0, VAL LI.1, ..., VAL LI.3.

Deux circuits de portes 592 et 593 sont prévus, ces circuits sont ouverts par les signaux de validation VAL LI.0 pour la ligne 0 de la carte, lorsque c'est cette ligne qui est balayée afin de permettre le transfert de l'information entre les lignes 348-346 et les bascules 410, 412, et entre le registre 408 et le bus 350.

Le circuit 592 calcule la parité de l'adresse reçue, et cette parité calculée est comparée avec la parité prédite (sortie 577 du circuit de la figure 9) dans le circuit OU Exclusif 593 qui génère sur sa sortie 594 l'information «LIC erreur» ou «LIC pas d'erreur»: LIC ACK.

On va maintenant décrire le fonctionnement du circuit de balayage de la figure 3.

A la fin de la phase d'initialisation le système étant préparé, le microprocesseur envoie par l'intermédiaire du registre 8-7 une commande de démarrage du balayage.

Le balayage commence par le premier interface de réception. Le registre 408-1 qui contient la configuration «modem-entrée» est adressé par le dispositif 303, ligne 340 et lu par le bus 350. Cette configuration indique si le modem correspondant est prêt à fonctionner. Cette configuration est comparée, dans le dispositif logique 308 avec les états des fils de commande précédents contenus dans le champ «modem-entrée» de l'ICW de la ligne balayée dans la mémoire C. Le masque associé à ce champ permet de limiter la comparaison aux seuls fils effectivement utilisés. En effet suivant le type de modem le nombre de fils de commande change. Sur la figure 6 on en a représenté six au maximum.

S'il y a une différence entre les deux configurations, on mémorise cette information MC dans le champ SCF de la mémoire A et en même temps on ré-écrit dans le mot ICW la nouvelle configuration Modem-Entrée.

Lorsque l'interface sera balayé de nouveau, l'information de changement d'état MC dans le champ SCF sera écrite dans le registre 8-6 et l'adresse de l'interface correspondant dans le registre 8-5, ce qui provoque une demande d'interruption au microprocesseur. Celui-ci pourra venir lire dans le champ modem-entrée du mot ICW de l'interface, dans la mémoire C, l'état du modem. S'il trouve celui-ci prêt à fonctionner, le microprocesseur peut démarrer une émission sur l'interface d'émission en écrivant dans le mot ICW de la mémoire A, le bit de départ par le canal asynchrone.

Lorsque dans le dispositif 301 cet interface va être balayé, la position correspondante de l'ICW dans la mémoire A est adressée, les deux premiers caractères à transmettre sont transférés de la mémoire du microprocesseur, en vol de cycle, le premier dans le champ PDF de la mémoire B et le second dans le champ PDF suivant SPDF de la mémoire A.

Le premier est écrit dans le premier champ PDF de la mémoire B avec un bit de départ dans le champ de contrôle associé PCF.

Lorsque le dispositif de traitement 300 balaye cet interface, c'est-à-dire que les positions des mémoires B et C affectées à cet interface sont adressées, le premier caractère à transmettre qui se trouve dans le champ PDF de la mémoire B est sérialisé en envoyant un bit vers l'interface chaque fois que lors du balayage de la ligne, le circuit LIC associé indiquera l'envoi du bit précédent sur l'interface par l'intermédiaire du fil de contrôle 346.

Lors de l'envoi du premier bit vers la carte LIC, le dispositif 308 ré-écrit le caractère PDF dans la mémoire B dans la zone SDF et demande par l'intermédiaire de la ligne de commande 352 que le caractère suivant soit extrait de la mémoire A, et écrit dans le champ PDF de la mémoire B. Cette demande se fait en écrivant dans le champ de contrôle SCF du mot ICW dans la mémoire A, un bit «caractère service».

Lorsque dans le dispositif de traitement 301, cet interface est de nouveau balayé plusieurs cas peuvent se produire. Il y a un caractère stocké dans le demi-mot 2 «PDF suivant», SPDF, celui-ci est lu et ré-écrit dans le demi-mot 2 PDF de la mémoire B. Il n'y a pas de caractère stocké, alors le dispositif 301 déclenche un processus de vol de cycle pour lire, dans la mémoire de commande du microprocesseur, les deux caractères suivants à envoyer sur la ligne.

Si le dispositif 301 détecte que ces deux caractères sont les derniers de la zone réservée à cet interface, une demande d'interruption sera envoyée au microprocesseur, par l'intermédiaire du champ «demande d'interruption» dans la mémoire A qui est transféré aux registres externes 8-6 pour indiquer la cause de l'interruption «fin de zone» et l'adresse de l'interface en cause est écrite dans le registre 8-5. Le microprocesseur saura alors que la zone de la mémoire de commande a été vidée et qu'elle doit être remplie à nouveau par la suite du message à transmettre.

Le microprocesseur place dans le champ de «commande 301» de la mémoire A un paramètre indiquant la fin de transmission.

Lorsque ce paramètre sera lu par l'intermédiaire du dispositif 316, il sera ré-écrit pour être conservé jusqu'à ce que le dernier caractère de la zone ait été envoyé à la mémoire B. Lorsque le dispositif 300 réclamera un nouveau caractère; le paramètre indiquant la fin de transmission lui sera envoyé. Trois bits sont alors envoyés en ligne par le dispositif 300 avant d'arrêter la transmission, ceci pour s'assurer que le dernier caractère a bien été envoyé.

Le circuit logique 308 a en plus pour fonction d'ajouter aux caractères transmis les informations requises par le protocole de ligne utilisé (bit de départ et d'arrêt en mode S/S; insertion de zéro en mode SDLC, etc.) d'une manière qui sera décrite par la suite.

Pour un interface de réception, le démarrage s'effectue comme en transmission en écrivant par le canal asynchrone le bit de départ dans le champ de commande SCF de la position de la mémoire A associée à l'interface de réception balayé. Lors du balayage de l'interface considéré, lorsque ce bit sera lu par la logique 316, il sera écrit dans le champ de contrôle SCF de la mémoire B.

Lors du balayage de l'interface lorsque la logique 308 lit ce bit, les bits reçus sur la ligne sont assemblés dans la zone SDF du mot ICW correspondant dans la mémoire B. Lorsqu'un caractère complet est reçu, il est écrit dans le champ PDF. Lorsque dans le dispositif 301, cet interface est balayé, ce caractère est écrit dans la position de mémoire A, ancien PDF. Le caractère suivant sera écrit dans le nouveau PDF et lorsque les deux champs sont pleins, ils sont transférés en vol de cycle dans la mémoire du microprocesseur.

Comme en émission lorsque la partie de mémoire associée à cet interface est pleine, une demande d'interruption est faite au microprocesseur.

On va donner avant de passer à la description détaillée du dispositif de balayage, dispositif 300, le format des différents paramètres utilisés.

Les formats des paramètres d'initialisation champ HW 1 octet 0 mémoire C sont les suivants, ces formats sont donnés à titre d'exemple et il est bien évident que si d'autres protocoles ou mode de transmission venaient à être utilisés, d'autres paramètres pourraient être définis. Ces paramètres sont placés en mode asynchrone dans l'octet 0, du demi-mot 1 de la mémoire C.

Chaque paramètre comporte 8 bits de 0 à 7. Ces paramètres sont les mêmes que l'interface soit un interface d'émission ou de réception.

Bits 0, 1, 2:
1 0 1　　ligne S/S
1 1 0　　ligne SDLC sans interruption au premier fanion
1 1 1　　ligne SDLC avec interruption au premier fanion
1 0 0　　ligne BSC commandée par code
0 0 .　　ligne BSC/ASCII
　　　　　(ASCII = American National Standard Code for Information Interchange)
0 1 .　　ligne BSC/EBCDIC

Bit 3:
Ce bit n'est pas utilisé en modes S/S et SDLC. En mode BSC il est utilisé de la façon suivante: BSC ASCII/EBCDIC le bit 3 doit être pris en considération avec le bit 2.
0 0　　le caractère ITB (fin de bloc intermédiaire) n'est pas un caractère de contrôle.
1 0　　mode EIB (EIB bloc d'information d'erreur).
0 1　　mode ITB (le caractère ITB est reconnu et le CRC est contrôlé).
1 1　　mode EIB+changement de bloc.

Bit 4:
Suivant le protocole ce bit signifie:
S/S　　longueur du code arrêt
　　　　　0=1 bit　　1=2 bits
SDLC　　code NRZI si égal à 1
BSC　　par code bit non utilisé
BSC ASCII/EBCDIC le bit 4 est à prendre en considération avec le bit suivant.

Bit 5:
Ce bit n'est pas utilisé pour le protocole S/S. Pour le protocole BSC il est utilisé de la manière suivante:
BSC　　par code si 1 signifie mono SYNC
BSC ASCII/EBCDIC en conjonction avec le bit 4 indique le type de contrôle d'erreur.
1 0　　CRC S　(CRC = Cyclic Redundancy Checking)
0 1　　CRC B
0 0　　CRC B ou S / STC pris en compte dans CRC
1 1　　LRC/VRC

S　　= SDLC
B　　= BSC
STC = Caractère de commande de départ
LRC = Longitudinal Redundancy Checking
VRC = Vertical Redundancy Checking

Bits 6 et 7:
Pour les protocoles S/S, BSC par code, ces deux bits donnent la longueur de caractère:
00　　5 bits/caractère
01　　6 bits/caractère
10　　7 bits/caractère
11　　8 bits/caractère
Si en SDLC 5, 6, 7 servent à compter les 1 successifs à envoyer en ligne au départ ils sont à 0.

Les paramètres de commande sont envoyés par le microcode de commande au dispositif 7 afin de commencer ou d'arrêter l'émission des données sur un interface «Emission» ou la réception des données sur un interface réception. Ces commandes sont envoyées à la ligne appropriée en utilisant le trajet asynchrone; registres externes 8, bus 11 et en envoyant à la mémoire 11 les paramètres de commande.

On va maintenant donner à titre d'exemple une définition du champ des paramètres de commande pouvant être utilisés.

Définition du Champ Paramètre de Commande Interface «Emission»

Ce champ comporte 16 bits de 0 à 15, les bits ayant la signification suivante, situés dans le demi-mot 4 de la mémoire A.
Bit 0　　bloc valide (bloc peut être transmis). Ce bit indique que le bloc de données associé contient des données à envoyer. Il est mis à zéro par le microcode de commande et mis à un par le dispositif de balayage lorsque l'information d'état est échangée.
Bit 0　　=　0　bloc valide
Bit 0　　=　1　bloc non valide
Bit 1　　Commencer transmission des données.
Bit 2　　Interruption demandée. Ce bit oblige le dispositif 7 à faire une demande d'interruption par l'intermédiaire d'un registre externe et de la ligne 18 lorsque le dernier caractère du bloc a été envoyé à la mémoire A dans la position appropriée correspondant à cet interface.
Bit 4　　Indicateur PDF→:　　0: SPDF libre
　　　　　　　　　　　　　　　　1: SPDF plein
Bits 5,
6, 7　　nombre d'octets de données dans le bloc. Ces bits indiquent le nombre de multiplets à prendre de ce bloc (de 1 à 8 multiplets en partant du début du bloc).
Bit 8　　envoyer CRC (valable pour le protocole SDLC). Ce bit signifie qu'à la fin du bloc le CRC accumulé [CRC mode de contrôle d'erreur: Cyclic Redundancy Checking] doit être envoyé.
Bit 9　　commencer sur octet impair. Si ce bit est à 1 le dispositif de balayage agit comme si le premier multiplet (multiplet 0) du bloc était déjà traité (ceci permet de commencer sur le second multiplet: multiplet 1, impair).

Bits 11, 12  Si «00»  données intermédiaires
Si «01»  dernières données, fin de message EOM.
Dans ce cas, le dispositif 7 envoie le bloc complet. Lorsque le dernier bit du dernier caractère à envoyer a été transmis au modem, le dispositif 7 interrompt le code de commande et arrête la transmission (EOT).
Si 1 0  continuer à transmettre ces données en permanence (boucle).
Lorsque les dernières données du bloc ont été lues, le dispositif de balayage revient aux premières données.
Si 1 1  fin de message avec reprise (turn around).
Même opération que précédemment (01) mais la ligne est mise automatiquement en mode début réception au temps EOT (fin de transmission).

Bit 13  Pas d'insertion de zéro dans ces données, pas d'accumulation CRC (SDLC) ou transmission interrompue (S/S). Ce bit demande que le dispositif 7 ne réalise pas d'insertion de zéro pour tous les multiplets de données compris dans ce bloc.

Bit 14  démarrer compteur de temps.
Bit 15  envoyer contenu registre «Modem-sortie» à la fin du bloc.
Interface «Réception».

Seuls huit bits sont utilisés dans le champ paramètre de commande, octet 0 du demi-mot 4 de la mémoire A.

Bit 0  bloc valide. (bloc prêt à recevoir des données, les données peuvent être envoyées par le dispositif 7. Il est mis à zéro par le microcode de commande et mis à un par le dispositif de balayage lorsque l'information d'état est échangée.
Bit 0  = 0  bloc valide
Bit 0  = 1  bloc non valide).
Bit 1  commencer réception des données: bit de départ.
Bit 2  faire une demande d'interruption à la fin du bloc.
Bit 4  indicateur PDF→   0 = SPDF libre
                         1 = SPDF plein
Bits 5, 6, 7  nombre de multiplets maximum à mettre dans ce bloc.

Dans la mémoire B, les bits du champ de commande SCF octet 1 du demi-mot 1 ont la signification suivante:

| Interface Réception | | Interface Emission | |
|---|---|---|---|
| Bit 8 | fin type 1, E1 | Bit 8 | envoyer CRC |
| Bit 9 | compteur bit | Bit 9 | compteur bit |
| Bit 10 | compteur bit | Bit 10 | compteur bit |
| Bit 11 | changement état modem | Bit 11 | changement état modem |
| Bit 12 | fin type 2 E2 | Bit 12 | EOT fin de transmission |
| Bit 13 | fin type 3 E3 | Bit 13 | pas de zéro insertion, pas d'accumulation CRC (SDLC) arrêt transmission suite à erreur en S/S |
| Bit 14 | compteur bit | Bit 14 | compteur bit |
| | | Bit 15 | envoyer modem sortie après fin de transmission |

Les bits 9, 10, 14 constituent un compteur à 3 bits pour compter les bits de données.

Les bits du champ PCF octet 1 demi-mot 2 de la mémoire B ont la signification suivante:

| Interface Réception | | Interface Emission | |
|---|---|---|---|
| | | Bit 8 | envoyer CRC |
| Bits 9 et 10 | sont à 0 | Bit 9 | = 0 |
| | | Bit 10 | = 0 |
| Seuls les bits 11 et 14 sont utilisés | | | |
| Bit 11 | rappel changement état modem | Bit 11 | rappel changement état modem |
| | | Bit 12 | EOT |

| Interface Réception | | Interface Emission | |
|---|---|---|---|
| | | Bit 13 | pas d'insertion de zéro, arrêt émission après erreur |
| Bit 14 | démarrage | Bit 14 | démarrage |
| | | Bit 15 | envoyer modem sortie |

Dans la mémoire C, le champ de commande qui contient des informations de service de ligne et de caractère a la signification suivante octet 1 du demi-mot 1.

## Mode S/S

| Interface Réception | | Interface Emission | |
|---|---|---|---|
| Bit 9 | caractère en phase ce bit indique que la synchronisation est obtenue | Bit 9 | changement état modem |
| Bit 10 | premier bit détecté | Bit 10 | premier bit détecté |
| | | Bit 11 | caractère manquant |
| Bit 13 | Phase STOP indique fin du caractère, des bits STOP sont à envoyer | Bit 13 | Phase STOP |
| Bits 14, 15 | état de la ligne | Bits 14, 15 | état de la ligne |
| | 00 inhibée | | idem réception |
| | 01 mode diagnostic | | |
| | 10 modem sans données | | |
| | 11 modem et données | | |

## Mode SDLC

| Interface Réception | | Interface Emission | |
|---|---|---|---|
| Bit 9 | caractère en phase | Bit 9 | changement état modem |
| Bit 10 | premier bit détecté | Bit 10 | premier bit détecté |
| Bits 11 et 12 | état SDLC | Bit 11 | manque caractère ou compte BCC |
| | 01 premier fanion | | |
| | 10 abandon | | |
| | 11 état inactif | | |
| Bit 13 | état dernière ligne | Bit 13 | état dernière ligne |
| Bits 14, 15 | état ligne | Bits 14, 15 | état ligne |
| | idem mode S/S | | idem mode S/S |

55

## Mode BSC

| Interface Réception | | Interface Emission | |
|---|---|---|---|
| Bit 9 | caractère en phase | Bit 9 | rappel changement état modem |
| Bit 10 | premier bit détecté | Bits 10 à 15 | idem interface réception |
| Bit 11 | C mode contrôle | | |
| Bit 12 | N mode normal | | |

13

Mode BSC

| | | |
|---|---|---|
| Bit 13 | X mode transparent tous les caractères sont considérés comme caractères de données | |
| Bits 14, 15 | état ligne idem mode S/S | |

Dans la mémoire A, le champ SCF octet 0 du demi-mot 1 a la signification suivante:

| | | Interface Réception | | | Interface Emission |
|---|---|---|---|---|---|
| De mande Ser vice ca- rac- tère au dis- posi- tif 300 | Bit 8 | Fin 1 | | | |
| | Bit 9 | Service caractère | | Bit 9 | Service caractère |
| | Bit 10 | Détection débordement caractère | | Bit 10 | Détection débordement caractère |
| | Bit 11 | Changement état modem | | Bit 11 | Tout type de changement état modem |
| | Bit 12 | Fin 2 | | Bit 12 | Fin de transmission EOT |
| | Bit 13 | Fin 3 | | | |

avec les significations suivantes:

| Service Caractère | Fin 1 | Fin 2 | Fin 3 | |
|---|---|---|---|---|
| 1 | 0 | 0 | 0 | données tout protocole |
| 1 | X | 0 | 1 | fin 3 détectée<br>X = 0 vérification CRC pas d'erreur<br>X = 1 vérification CRC erreur |
| 1 | 0 | 1 | 1 | fanion fin mal cadrée SDLC |
| 1 | 1 | 0 | 0 | abandon (mode SDLC) |
| 1 | 1 | 1 | 0 | état inactif (mode SDLC) |
| 1 | X | 0 | 1 | quitte mode normal ou transparent BSC<br>X = 0 vérification CRC pas d'erreur<br>X = 1 vérification CRC erreur |
| 1 | 1 | X | 0 | quitte mode contrôle BSC<br>X = 0 vérification caractère de remplissage, pas d'erreur<br>X = 1 vérification caractère de remplissage, erreur |
| 1 | 0 | 1 | 1 | forcer compteur trois secondes BSC |
| 1 | 1 | 1 | 1 | arrêter compteur |

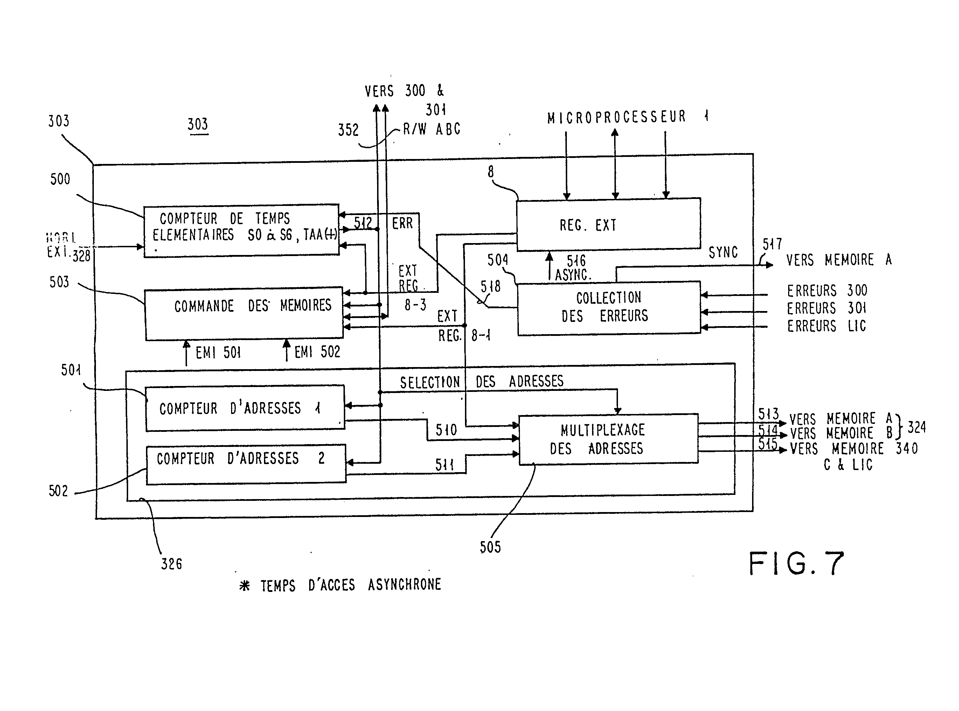

On va maintenant décrire en référence à la figure 7, le dispositif de contrôle et d'adressage.

Ce dispositif est décrit dans la demande de brevet européen publiée sous le numéro EP-A-0 077 864 le 04 mai 1983, et déposée par la demanderesse le 28 octobre 1981.

Il comprend les registres externes 8 tels que définis en référence à la figure 3, dont le rôle est de permettre la communication entre le microprocesseur et le dispositif de balayage et le dispositif de sélection d'adresses 326 chargé d'adresser les mémoires A, B, C et de fournir les adresses des lignes soit au cours du balayage séquentiel de ces lignes, soit au cours d'une opération asynchrone du microprocesseur pour accéder à une mémoire A, B ou C ou à un registre des circuits d'interface LIC.

De plus le dispositif 303 contient un compteur de temps 500 pour générer des temps élémentaires S0 à S6 dans le mode de réalisation particulier décrit, à partir d'une horloge externe, ces temps servant aux dispositifs 300 et 301 à assurer la chronologie de leurs opérations.

Le dispositif de sélection d'adresses 326 est synchrone du compteur de temps 500. Il contient lui-même deux compteurs de temps 501 et 502 appelés compteurs d'adresses 1 et 2. Le compteur d'adresses 1, 501, génère les adresses de balayage destinées au dispositif 300 et aux circuits d'interface LIC. Ces adresses restent stables pendant la période comprise entre S0 et S6 inclus, période dévolue au travail du dispositif 300 sur un interface de ligne, puis le compteur s'incrémente pour passer à l'interface suivante en accord avec la méthode de balayage décrite en référence aux figures 4 et 5.

LIGNE X

| | Réception | | Emission | |
|---|---|---|---|---|
| ! ! ! ! ! ! | ! ! ! ! ! ! | | | |
| S0 S1 S6 | S0 S6 | | | |

LIGNE Y

| | Réception | | Emission | |
|---|---|---|---|---|
| ! ! ! ! ! ! | ! ! ! ! ! | | | |
| S0 S6 | S0 S6 | | | |

Les compteurs d'adresses 2, 502 génèrent les adresses de balayage destinées au dispositif 301, ces adresses s'incrémentent exactement comme celles fournies par le compteur 501 mais de 4 à 8 fois plus lentement en fonction du travail à effectuer par le dispositif 301 ce qui fait que les adresses des lignes sur lesquelles fonctionnent les dispositifs 300 et 301 sont généralement différentes.

A partir des temps élémentaires S0 à S6 le dispositif 301 établit des phases de travail P0 à P3 et l'adresse de balayage reste fixe tout au long de ces phases pour permettre au dispositif 301 d'effectuer son travail sur un interface donné.

Après la phase P3, on retrouve P0 et le compteur s'incrémente pour passer à l'interface suivante qui peut être l'interface émission de la même ligne ou l'interface réception de la ligne suivante.

Avant le démarrage du balayage, commandé par le microprocesseur en restaurant le bit 2 du registre externe 8-7 qui bloque le balayage comme on l'a expliqué précédemment, les compteurs 501 et 502 sont à zéro, ce qui fait que le balayage commencera par l'adresse 0 et sur l'interface de réception pour chacun des dispositifs 300 et 301.

Quand l'un des compteurs atteint la valeur de la dernière adresse à balayer, l'incrémentation suivante le ramène à l'adresse de la première ligne.

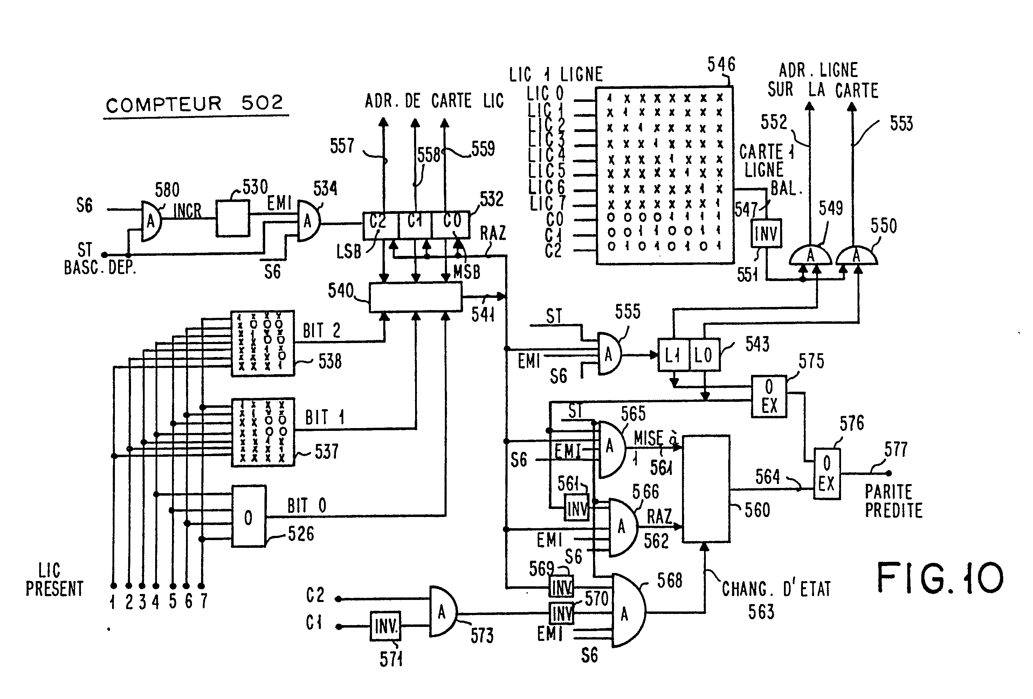

Les moyens permettant de réaliser cette opération seront décrits ultérieurement en référence aux figures 9 et 10.

Les adresses générées par les compteurs 501 et 502 sur les bus d'adresses 510 et 511 entrent dans un dispositif de multiplexage d'adresses dont la fonction est de distribuer les adresses aux dispositifs 300 et 301 et aux circuits d'interface LIC en tenant compte des temps élémentaires S0 à S6 fournis en 512 par le compteur 500.

En général le dispositif 300 reçoit les adresses du compteur 501 pour ses mémoires B et C et le dispositif 301 les adresses du compteur 502 pour sa mémoire A. Mais pour permettre une communication entre les dispositifs 300 et 301 à certains temps élémentaires fixes qui seront définis ultérieurement, la mémoire A reçoit les adresses du compteur 501 pour la rendre accessible au dispositif 300 et la mémoire B reçoit les adresses du compteur 502 pour la rendre accessible au dispositif 301.

Les adresses délivrées à la mémoire C et aux circuits d'interface LIC par le dispositif 505 sont toujours celles du compteur 501.

Le circuit 505 a trois sorties: 513 pour l'adressage de la mémoire A, 514 pour l'adressage de la mémoire B et 515 pour l'adressage de la mémoire C et des circuits LIC.

Le dispositif de sélection d'adresses 326 est en relation avec le microprocesseur 1 par l'intermédiaire du registre externe 8-1. Lors d'une opération asynchrone du microprocesseur pour accéder à une mémoire ou à un circuit LIC, le microprocesseur charge dans le registre 8-1 l'adresse de l'interface sur laquelle portera l'opération. Au moment où l'opération s'exécute, cette adresse se substitue aux adresses des compteurs d'adresses 501 et 502 et est délivrée simultanément aux dispositifs 300 et 301 et LIC par le circuit de multiplexage des adresses 505. Le travail synchrone du dispositif de balayage 7 est suspendu pendant le temps de l'opération du microprocesseur. Le temps d'accès asynchrone TAA est généré par le compteur de temps élémentaire seulement dans le cas d'une opération de lecture ou d'écriture du microprocesseur portant sur une mémoire A, B, C ou sur un registre de circuits LIC. L'opération est déclenchée par le chargement du registre 8-3 par le microprocesseur. Le temps TAA s'intercale entre le prochain temps S6 rencontré et le temps S0 suivant. Il a donc pour effet de ralentir la vitesse de balayage des compteurs 501 et 502 mais cette vitesse a été choisie suffisamment grande pour autoriser de nombreux accès sans diminuer les performances du dispositif de balayage 7.

15

**0 077 863**

Accès demandé

TAA

S0   S6   S0

En dehors des adresses de lignes, les mémoires A, B, C reçoivent du dispositif 303 des commandes de sélection et des commandes de lecture et d'écriture (CTL 352 sur la figure 3) élaborées par le dispositif de commande des mémoires 503 en fonction des temps élémentaires S0 à S6 qui définissent les opérations synchrones à exécuter par les dispositifs 300 et 301, de signaux EMI qui s'ils sont à 1 indiquent que l'interface balayé est un interface émission et qui est élaboré par les compteurs d'adresses.

Pendant le temps TAA, ces commandes sont issues du contenu du registre externe 8-3 chargé préalablement par le microprocesseur.

Un autre organe du dispositif 303 est le dispositif de collection des erreurs 504. Son rôle est de centraliser toutes les informations d'erreur décelables par le dispositif 7 et les signaler au microprocesseur.

On distingue les erreurs du type synchrone détectées au cours du travail sur les lignes des dispositifs 300 et 301 et les erreurs de type asynchrone apparues pendant un accès du microprocesseur à une mémoire ou à un registre de LIC au temps TAA.

Les erreurs asynchrones sont rangées dans le registre externe 8-4 par le bus de sortie 516 suivant la configuration décrite précédemment en référence à la figure 3.

Après avoir commandé une opération, le microprocesseur lit le registre 8-4 pour savoir si elle s'est terminée correctement.

Les erreurs synchrones peuvent être:
– erreur dans la carte LIC adressée par le compteur d'adresses 501, erreur au niveau de la reconnaissance de l'adresse ou panne d'un circuit d'attaque de ligne.
– erreur de parité sur un bus interne du dispositif de balayage 7.
– erreur de parité sur les adresses ou les données générées par le dispositif 7 pour accéder à la mémoire du microprocesseur en vol de cycle.

Dans le dispositif de balayage, les erreurs synchrones sont enregistrées et traitées au niveau de la ligne en erreur. De cette façon le travail sur les autres lignes n'est pas perturbé. L'information d'erreur est chargée par le bus 517 dans la mémoire A, demi-mot 1, octet 1, par le dispositif 504, qui déclenche pour ce faire un temps TAA identique au temps défini ci-dessus pour les accès synchrones.

Pendant le temps TAA réservé à l'enregistrement des erreurs l'adresse de la mémoire A peut être l'adresse 501 ou l'adresse 502 suivant que l'erreur est apparue au niveau du dispositif 300 ou du dispositif 301. Une erreur en provenance d'une carte LIC sera attribuée à l'interface d'adresse fournie par 501 tandis qu'une erreur apparue dans un vol de cycle appartient à l'interface d'adresse fournie par 502. Les erreurs détectées sur un bus interne sont affectées au dispositif 300 ou au dispositif 301 en fonction de leur utilisation du bus: plus précisément les erreurs de ce type survenues au temps S0, S1 ou S2 sont affectées au dispositif 301 (adresse fournie par 502) et les erreurs sur le bus survenues aux autres temps synchrones, au dispositif 300 (adresse fournie par 501).

En admettant que l'on puisse avoir en même temps une erreur dans les deux dispositifs 300 et 301, le temps TAA est partagé en deux parties, la première réservée à l'enregistrement des erreurs du dispositif 301 (adresse fournie par 502), la deuxième réservée à l'enregistrement des erreurs du dispositif 300 (adresse fournie par 501). Ceci sera explicité ultérieurement sur un tableau donnant le multiplexage des adresses.

Au cours du temps TAA, la mémoire A peut ainsi recevoir deux informations d'erreur correspondant chacune à une adresse différente.

L'information d'erreur est placée dans un octet dont les bits 6 et 7 sont à zéro. Le mécanisme d'enregistrement des erreurs qui commande l'écriture de cet octet dans la mémoire A, commande en même temps l'écriture de cet octet dans les mémoires B et C. Dans la mémoire B le bit 6 à zéro du demi-mot 1, octet 1, vient effacer le bit départ et dans la mémoire C les bits 6 et 7 à zéro viennent mettre à zéro les bits «ligne inhibée» demi-mot 0 octet 1.

De cette façon la ligne en erreur est arrêtée et si de nouvelles erreurs sont détectées sur cette ligne elle ne seront plus enregistrées tant que la ligne n'aura pas été redémarrée par le microprocesseur pour ne pas perturber ce dernier par de multiples informations d'erreurs.

Les opérations de chargement des informations d'erreurs sont prioritaires sur les opérations du microprocesseur sur les mémoires et les cartes LIC. Sie une erreur synchrone se produit alors que le microprocesseur vient procéder à une opération sur une mémoire le prochain temps TAA est attribué au traitement de l'erreur et le microprocesseur doit attendre un temps TAA suivant.

La suite du traitement de l'erreur est prise en compte par le dispositif 301 lorsque le compteur 502 atteint l'adresse de la ligne sur laquelle l'erreur s'est produite, l'information d'erreur de la mémoire A est rangée dans le registre externe 8-6, l'adresse de la ligne est chargée dans le registre 8-5 et une demande d'interruption est envoyée au microprocesseur qui vient ensuite lire les registres externes 8-5 et 8-6 pour connaître l'adresse de la ligne en erreur et la cause de l'erreur.

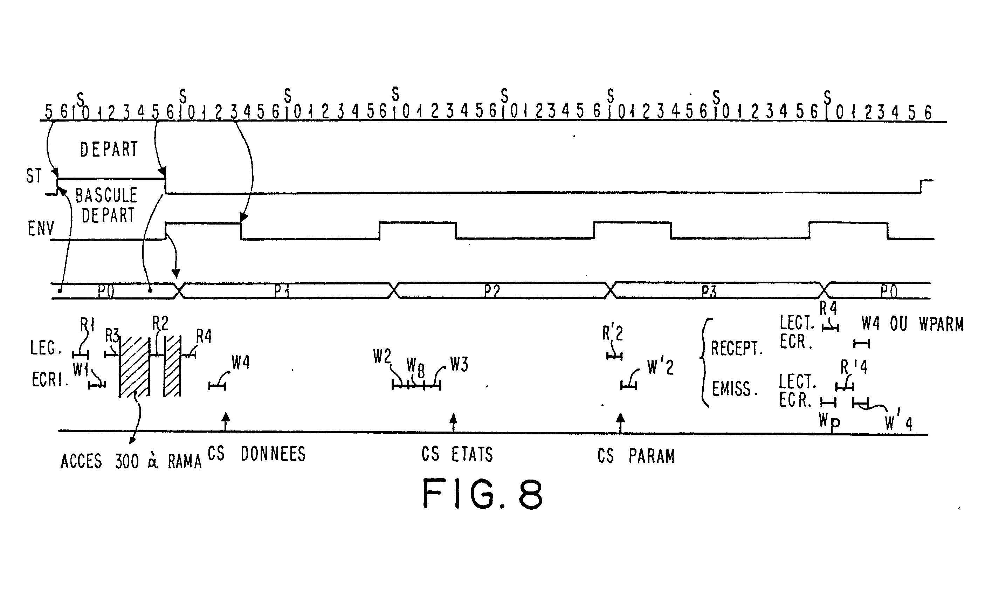

Sur la figure 8 est représenté le diagramme des temps du fonctionnement du dispositif 301 pouvant se répéter jusqu'à huit fois à chaque balayage d'interface. On balaie d'abord l'interface réception puis l'interface émission.

Une impulsion de départ prévient le sélecteur d'adresse que le dispositif 301 est prêt à fonctionner.

Une impulsion dite Enveloppe ENV permet la synchronisation après une phase de vol de cycle avec le microprocesseur et la différentiation entre une phase de travail dans le dispositif 301 et une phase d'échange d'information avec le microprocesseur.

On va maintenant décrire en référence aux figures 9 et 10, le schéma des compteurs d'adresses 501 et 502 respectivement. Ces deux compteurs se composent des mêmes éléments fondamentaux. En conséquence, seul le compteur 501 sera décrit en détail et on ne décrira que les éléments du compteur 502 qui diffèrent. Ces compteurs s'appliquent à la configuration de réseau comportant huit cartes LIC par adaptateur; elles-mêmes connectées à quatre lignes au maximum. Il est bien évident que des configurations différentes pourraient être envisagées, il suffirait de changer le nombre d'étages des différents compteurs de cartes et de lignes.

Le compteur 501 comprend une bascule Réception/Emission 530. Au démarrage du balayage, elle est à 0, puisqu'on commence toujours par le balayage d'un interface réception, elle est remise à zéro par la remise à zéro générale de la machine. Elle change d'état à chaque impulsion S6 fournie par le compteur de temps élémentaires sur la ligne 512 (figure 7). Donc à la fin du balayage de chaque interface elle change d'état, elle fournit une impulsion au niveau haut 1, lorsqu'on balaye une interface émission, et une impulsion au niveau bas 0 lorsqu'on balaye une interface réception.

Un compteur de carte 532, à 3 bits C0, C1, C2; C2 étant le bit le moins significatif LSB et C0 le bit le plus significatif MSB a pour rôle de fournir la partie de l'adresse qui pointe sur les cartes LIC. Lorsque les cartes LIC, LIC 0 à LIC 7 sont installées, ce compteur compte jusqu'à la valeur binaire 111, pour pointer sur la huitième carte puis passe automatiquement à 0 à l'incrémentation suivante.

Il est incrémenté par l'intermédiaire de la porte ET 534, qui est conditionnée par la sortie de la bascule 530 et l'impulsion S6. Ainsi, il est incrémenté lorsque l'interface de réception et d'émission d'une ligne ont été balayées, pour passer à la carte suivante.

Lorsqu'il y a moins de huit cartes LIC installées, le contenu du compteur de cartes est limité automatiquement à l'adresse de la dernière carte installée, par l'intermédiaire du circuit logique comportant le circuit OU 536, et les deux circuits logiques 537 et 538.

L'information «dernière carte installée» est codée sur trois bits: bit 0 à la sortie du circuit 536, bit 1 à la sortie du circuit 537, et bit 2 à la sortie du circuit 538. Ces bits sont codés de la façon suivante:

| Bit 0 | Bit 1 | Bit 2 | Dernière carte installée |
|---|---|---|---|
| 0 | 0 | 0 | LIC 0 (dernière carte installée) |
| 0 | 0 | 1 | LIC 1 |
| 0 | 1 | 0 | LIC 2 |
| 0 | 1 | 1 | LIC 3 |
| 1 | 0 | 0 | LIC 4 |
| 1 | 0 | 1 | LIC 5 |
| 1 | 1 | 0 | LIC 6 |
| 1 | 1 | 1 | LIC 7 |

On suppose la carte LIC 0 toujours présente.

Le circuit logique 536, 537, 538 utilise le signal «LIC présent» sur la ligne 342 de chaque LIC. Ce signal est mis à un niveau haut par l'intermédiaire d'un commutateur, lorsqu'une carte LIC est connectée à la machine.

Le circuit OU 536 reçoit les signaux LIC 7, LIC 6, LIC 5, LIC 4 présents. Il fournit donc le bit 0. Les circuits 537 et 538 sont des ensembles ET, OU, INVERSEUR (A01). Le circuit 537 fournit un signal de sortie «bit 1» à 1 lorsque:

La carte LIC 7 est présente, ou la carte LIC 6, ou que la carte LIC 5 est absente ainsi que LIC 4 et que LIC 3 est présent, ou que la carte LIC 5 est absente ainsi que LIC 4 et que LIC 2 est présente, comme schématisé dans le circuit 537.

Dans la représentation schématique des figures 9 et 10, X signifie 1 ou 0 état indifférent. Le circuit 537 fait l'opération ET des signaux des différentes colonnes avec les valeurs indiquées, et l'opération OU entre les différentes colonnes.

Le circuit 538, fournit un signal de sortie bit 2 à 1 lorsque la carte LIC 7 est présente, ou que LIC 6 est absente et LIC 5 présente, ou que LIC 6 est absente ainsi que LIC 4 et que LIC 3 est présente, ou que LIC 6 est absente ainsi que LIC 4 ainsi que LIC 2 et que LIC 1 est présente.

Le contenu du compteur 532 est comparé par le comparateur 540 à l'information «dernière carte installée». Lorsqu'il y a égalité, le comparateur génère l'information «dernière carte balayée» sur la ligne de sortie 541.

A la prochaine impulsion S6, le compteur repasse à 0 par l'intermédiaire de sa commande de remise à zéro RAZ, fournie par la sortie 541.

Un compteur de lignes 543, comporte deux bits L0 et L1, il sert à fournir la partie de l'adresse qui pointe sur une ligne de la carte sélectée par le compteur de cartes.

Le compteur de lignes compte systématiquement jusqu'à atteindre la valeur binaire 11, puis il repasse automatiquement à 00. Il balaie ainsi les quatre lignes d'une carte LIC lorsque cette dernière n'est pas une carte «LIC 1 ligne».

Si cette carte est une «LIC 1 ligne» comme indiqué par un signal sur la ligne 344 (figure 6) l'adresse de cette ligne doit être 00.

Un circuit logique 546 détecte que la carte balayée n'a qu'une ligne et génère l'information «carte 1 ligne» balayée sur la ligne 547.

Le circuit 546 reçoit les informations d'adresses de carte C2, C1, C0 et les informations «LIC 1 ligne». Il fournit un signal sur sa sortie 547 au niveau 1, lorsque pour une carte donnée dont l'adresse est définie par les bits d'adresses C2 à C0, une des cartes LIC 0 à LIC 7 ne comporte qu'une ligne. Les mêmes conventions que pour les circuits 538 et 537 ont été utilisées.

L'information «carte 1 ligne balayée» sur la ligne 547 est utilisée pour effacer les bits L0 et L1 à la sortie du compteur de ligne 543 par l'intermédiaire des portes ET 549 et 550.

Les portes ET sont conditionnées par la sortie 547 inversée par l'inverseur 551. Elles transmettent sur les lignes de sortie «Adresse ligne sur la carte» 552 et 553 le contenu du compteur 543, lorsque la carte balayée n'est pas une carte 1 ligne. Dans le cas contraire, les lignes de sortie 552 et 553 sont aux niveaux 0.

Le compteur de lignes 543 est incrémenté par l'intermédiaire de la porte ET 555 conditionnée par l'information «dernière carte balayée» sur la ligne 541, impulsion S6 et lorsque le signal de sortie EM de la bascule 530 est à 1, indiquant que l'on a fini de balayer l'interface émission et que l'on va passer à l'interface réception de la ligne suivante.

L'ensemble comporte un circuit de prédiction de parité pour vérifier en permanence le bon fonctionnement du compteur d'adresses.

Ce circuit détermine à chaque incrémentation la valeur que doit prendre la parité du bus d'adresse comprenant les lignes de sortie 557, 558, 559 du compteur 532, et les lignes 552 et 553.

En cas de mauvais fonctionnement du compteur aboutissant par exemple à la génération d'un bit d'adresse incorrect, la parité calculée à partir des bits d'adresse ne correspondra pas à la parité prédite et le défaut pourra être détecté. Le bon fonctionnement du compteur d'adresses 501 est vérifié par les LIC d'une façon qui sera expliquée par la suite.

Le circuit de prédiction de parité est construit sur les observations suivantes:

Parité du compteur de cartes 532
(pour une valeur donnée du compteur de lignes)

| C0 | C1 | C2 | P | |
|---|---|---|---|---|
| →0 | 0 | 0 | 1 | Etat initial |
| 0 | 0 | 1 | 0 | |
| 0 | 1 | 0 | 0 | ← Parité de change pas |
| 0 | 1 | 1 | 1 | |
| 1 | 0 | 0 | 0 | |
| 1 | 0 | 1 | 1 | |
| 1 | 1 | 0 | 1 | ← Parité ne change pas |
| ⌐1 | 1 | 1 | 0 | |

A chaque incrémentation, la partie change de valeur sauf si C1 = 0 et C2 = 1.

Parité de l'adresse de ligne
Compteur de cartes et de lignes 532 et 543

| L0 | L1 | C0 | C1 | C2 | P | |
|---|---|---|---|---|---|---|
| 0 | 0 | 0 | 0 | 0 | 1 | Etat initial |
| 0 | 0 | 0 | 0 | 1 | 0 | |

Parité de l'adresse de ligne
Compteur de cartes et de lignes 532 et 543

| L0 | L1 | C0 | C1 | C2 | P |
|---|---|---|---|---|---|
| 0 | 0 | 0 | 1 | 0 | 0 |
| ↓ | ↓ | etc. | | | |
| 0 | 0 | Dernière carte installée | | | |

| Incrémentation | | Remise à zéro | | | Prédiction de la parité |
|---|---|---|---|---|---|
| 0 | 1 | 0 | 0 | 0 | 0 |
| 0 | 1 | 0 | 0 | 1 | 1 |
| ↓ | ↓ | etc. | | | |
| 0 | 1 | Dernière carte installée | | | |

| Incrémentation | | Remise à zéro | | | |
|---|---|---|---|---|---|
| 1 | 0 | 0 | 0 | 0 | 0 |
| 1 | 0 | 0 | 0 | 1 | 1 |
| ↓ | ↓ | etc. | | | |
| 1 | 0 | Dernière carte installée | | | |

| Incrémentation | | | | | |
|---|---|---|---|---|---|
| 1 | 1 | 0 | 0 | 0 | 1 |
| 1 | 1 | 0 | 0 | 1 | 0 |
| ↓ | ↓ | etc. | | | |
| 1 | 1 | Dernière carte installée | | | |
| | | Retour à l'état initial | | | |

Comme on peut le voir sur les tableaux ci-dessus pour une valeur donnée du compteur de lignes, la parité change de valeur à chaque incrémentation du compteur de cartes sauf si C1 = 0 et C2 = 1.

Lorsque le compteur de cartes atteint la valeur correspondant à la dernière LIC installée, l'incrémentation suivante le remet à 0, incrémente le compteur de lignes, et force la parité à une valeur qui dépend de l'état précédent.

Si L0 = 0 la nouvelle parité vaudra 0
Si L0 = 1 la nouvelle parité vaudra 1

Dans le cas où le compteur de cartes pointe sur une carte «1 ligne», la remise à zéro de la sortie du compteur de lignes par les portes ET 549 et 550 oblige à corriger la parité prédite. Dans ce cas:

Si L1 = L0 la parité est inchangée
Si L1 ≠ L0 la parité est inversée

Le circuit de prédiction de parité comprend une bascule de prédiction de parité 560 qui peut être mise à 1 par un signal sur son entrée 561: mise à 1 et remise à zéro par un signal sur son entrée remise à zéro RAZ 562. Un signal sur son entrée 563 «changement d'état», fait changer l'état de son signal de sortie sur la ligne 564.

Au démarrage de la machine, tous les compteurs sont remis à zéro et la bascule de parité est mise à 1. Au cours du balayage la bascule 560 est mise à 1 par le circuit ET 565 qui est conditionné lorsque L0 = 1, lorsque la dernière carte installée est détectée (ligne 541 à 1) lorsque l'incrémentation a lieu (EMI et S6 à 1).

Elle est mise à 0, par le circuit ET 566 qui est conditionné lorsque L0 = 0 par l'intermédiaire de l'inverseur 567, lorsque la dernière carte installée est détectée et lorsque l'incrémentation a lieu (EMI et S6 à 1).

La porte ET 568 est conditionnée et sert au cours du balayage des cartes pour un état donné du compteur de lignes à empêcher le changement d'état de la bascule 560 lorsque C1 = 0 et C2 = 0. La bascule 568 reçoit en entrées le signal «dernière ligne balayage» inversé par l'inverseur 569, les signaux EMI et S6 et la sortie inversée par l'inverseur 569, les signaux EMI et S6 et la sortie inversée par l'inverseur 570 du circuit ET 573 qui est conditionné lorsque la condition C2 = 1 et C1 = 0 est remplie. C1 est appliqué au circuit ET 573 par l'inverseur 571.

La condition L1 ≠ L0 est détectée par le circuit OU exclusif 575, et la partie détectée dans ce cas à la sortie 564 est inversée par le circuit OU exclusif 576.

L'indication de parité est fournie par ce circuit 576 sur sa sortie 577.

La logique permet donc de prédire la partie pendant le déroulement du balayage conformément aux tableaux précédents.

Dans chaque LIC, comme représenté sur la figure 6 le comparateur 590 reçoit d'une part l'adresse de LIC C0, C1, C2 et son adresse câblée et le circuit de décodage 591 reçoit l'adresse de ligne L0, L1.

Les signaux de validation sont à 1 dans les conditions suivantes:

| L0 | L1 | Validation |
|----|----|------------|
| 0  | 0  | VAL LI.0   |
| 0  | 1  | VAL LI.1   |
| 1  | 0  | VAL LI.2   |
| 1  | 1  | VAL LI.3   |

Le compteur 502 comprend les mêmes éléments que le compteur 501. Il a donc été représenté sur la figure 10, avec les mêmes éléments portant les mêmes références. Le circuit d'incrémentation est modifié.

La bascule réception/émission 530 qui à l'état initial est à 0 et est incrémentée lorsque l'impulsion de départ ST est au niveau haut, au temps S6 par l'intermédiaire du circuit ET 580.

La porte ET 534 est conditionnée par l'impulsion de départ, S6 et EM. Une condition supplémentaire est ajoutée aux portes ET 565, 566 et 568, à savoir ST = 1.

Ainsi l'adresse fournie par le compteur 502 destinée à l'adressage de la mémoire A dans le dispositif 301 s'incrémente moins rapidement que l'adresse fournie par le compteur 501, sous contrôle de l'impulsion de départ ST.

La parité du compteur d'adresse 502 est vérifiée quand ce dernier est transféré au registre externe 8-5 puis lu par le microprocesseur à la suite d'une interruption.

Le circuit de multiplexage des adresses sur la figure 7 reçoit les adresses générées par les compteurs d'adresses 501 et 502, les impulsions S0 et S6 et TAA par la ligne de sélection 518, et les adresses stockées dans les registres externes pour l'opération asynchrone. Il permet d'aiguiller les informations d'adresses sur les lignes de sortie 513, 514 et 515 conformément au tableau ci-après. Il est constitué d'un ensemble de portes ET et OU, qui sont conditionnées aux instants appropriés pour laisser passer les signaux d'adresses adéquates.

Le dispositif 300 assure la commande de liaison des données au niveau bit et la liaison avec le dispositif 301.

Il a donc pour fonction:
- assembler les bits reçus en caractères
- désassembler les caractères à transmettre en bits
- gérer la ligne en utilisant les configurations «modem-entrée», «modem-sortie»
- supporter au moins les protocoles de lignes suivants Multiplexage des adresses de lignes en fonction des opérations et des temps élémentaires

| | Fonctionnement Synchrone! | | | Accès Asynchrone | Enregistrement des erreurs synchrones | |
|---|---|---|---|---|---|---|
| | S0, S2, S5 | S1 | S3, S4, S6 | Temps TAA | Temps TAA Première partie | Deuxième partie |
| **Sortie 513** Adresse de lignes vers MEM A | Adresse 502 | Adresse 502 | Adresse 501 | Registre 8-1 | Adresse 502 | Adresse 501 |
| **Sortie 514** Adresse de lignes vers MEM B | Adresse 501 | Adresse 502 | Adresse 501 | Registre 8-1 | Adresse 502 | Adresse 501 |
| **Sortie 515** Adresse de lignes vers MEM C et LICs | Adresse 501 | Adresse 501 | Adresse 501 | Registre 8-1 | Adresse 502 | Adresse 501 |

– arythmique S/S avec un bit code départ, 5 à 8 bits d'informations, 1 ou 2 bits code arrêt, insertion et suppression des bits des codes départ et arrêt,

– BSC en EBCDIC ou ASCII mode normal ou transparent avec gestion des contrôles d'erreurs CRC, VRC, LRC, reconnaissance des caractères de contrôle, insertion et suppression des caractères de synchronisation, assistance du compteur de temps,

– SDLC avec gestion du caractère de contrôle CRC, insertion et suppression du bit zéro, détection des fanions, abandons et état inactif,

– support des interfaces de ligne.

Les informations de lignes nécessaires pour le traitement d'un interface réception ou émission se trouvent dans les paramètres d'initialisation stockés dans la mémoire C en mode asynchrone, dont la signification a été donnée précédemment.

Les informations servant à la gestion des caractères sont formées et stockées dans les champs de commande des mémoires B et C qui ont été définis précédemment. Les informations sont les suivantes:

– un compteur de bits pour former les caractères
– le premier bit d'un caractère
– le caractère en cours de désérialisation ou de sérialisation
– l'état de la ligne (normal, diagnostic, etc.)
– la détection d'un caractère,
– la détection d'un changement dans l'état des fils de contrôle du modem (différence entre le début et la fin de la transmission)
– la détection du manque de caractères ou de débordement de caractères (ces indications signalent que les dispositifs 300 et 301 sont désynchronisés, c'est-à-dire que le dispositif 301 n'a pas servi le dispositif 300 à temps ou que le microprocesseur n'est pas venu lire les caractères dans la mémoire A
– accumulation du CRC
– la gestion du modem: configuration modem-sortie: elle est envoyée au modem quand la ligne est dans l'état modem ou modem plus données; configuration modem-sortie empilée: à la fin de la transmission sur ordre du microprocesseur le dispositif 300 envoie cette configuration au modem pour en changer l'état configuration modem-entrée: elle est comparée avec celle venant du circuit LIC éventuellement sous contrôle d'une configuration de masquage.

Comme on l'a indiqué précédemment les mémoires B et C ont été affectées à la réalisation de ces fonctions, ces deux mémoires pouvant être utilisées en parallèle, ceci pour des raisons de performances.

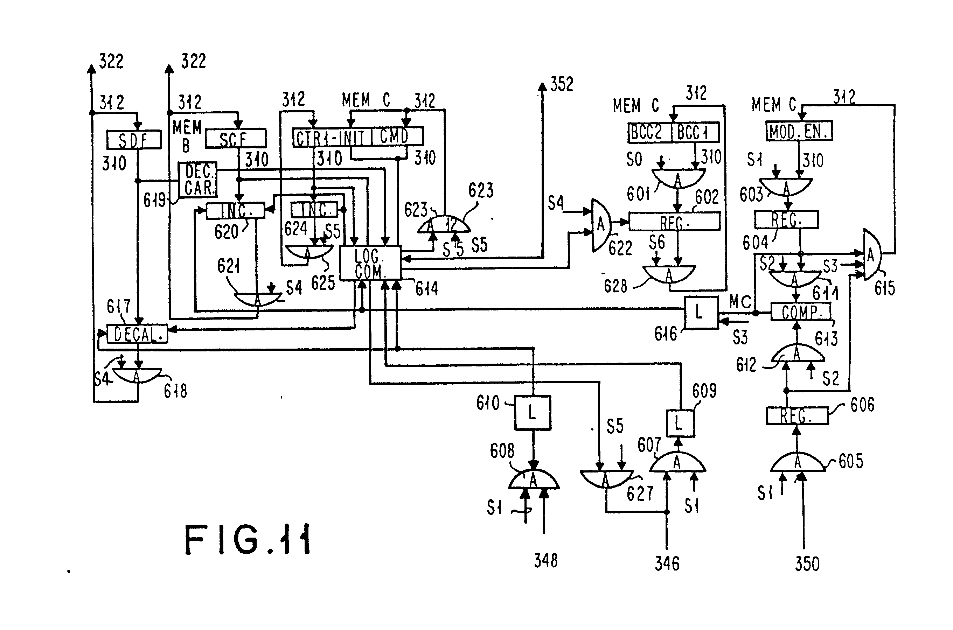

On va maintenant décrire en référence aux figures 11, 12, 13 et 14, un mode de réalisation du circuit 308. Ce circuit est un ensemble logique qui comporte essentiellement des registres REG, des circuits d'incrémentation INC, un comparateur COMP, des bascules L, des portes ET représentées par des demi-cercles avec un A. Ce circuit est contrôlé par les impulsions S0 à S6 issues du compteur 500 (figure 7).

Sur la figure 11, on a représenté les éléments utilisés pour le balayage d'une interface réception adressée par le dispositif de contrôle et de sélection d'adresses. Les éléments utilisés pour le balayage d'un interface émission sont représentés sur la figure 12, ce sont bien entendu les mêmes mais actionnés différemment.

Sur la figure 11 on a représenté les champs SDF et SCF de la mémoire B qui sont adressés pour le balayage d'un interface réception, le champ mode initialisation INIT qui en mode SDLC notamment contient trois bits CTR1 utilisés comme compteur de uns, le champ de commande CMD, les champs BCC1 et BCC2 et la configuration modem entrée MOD EN de la mémoire C. On suppose que l'interface reçoit des données SDLC.

Au temps S0 de l'intervalle de temps alloué au balayage de l'interface, le contenu du demi-mot BCC1/BCC2 est transféré par la porte ET 601, conditionnée par S0, au registre 602.

Au temps S1, le contenu du demi-mot MOD EN est transféré par la porte ET 603 conditionnée par S1 au registre 604. Au même temps, le contenu du registre modem-entrée 408.2 dans le circuit LIC correspondant est transféré par le bus 350 et la porte ET 605 au registre 606 et le contenu des bascules 412-2 (bit service) et 410-2 (bit donnée) sur les fils 346 et 348 sont transférés par les portes ET 607 et ET 608 aux bascules 609 et 610.

Au temps S2, les contenus des registres 604 et 606 sont envoyés par les portes ET 611 et ET 612 au comparateur 613.

Les contenus des demi-mots SDF/SCF et INIT/CMD sont lus et restent disponibles à la sortie de la mémoire jusqu'à la fin du balayage de l'interface, comme représenté schématiquement sur la figure 11.

Au temps S3, si le comparateur indique que les deux configurations sont différentes, le contenu du registre 606 est ré-écrit dans la zone modem-entrée par la porte ET 615, et l'information changement état du modem MC est chargée dans la bascule 616. Si les configurations sont les mêmes aucune ré-écriture n'a lieu, l'octet modem-entrée reste inchangé.

Au temps S4, l'octet SDF qui se trouve dans le registre à décalage DECL 617, est décalé vers la droite et le bit reçu en provenance de la bascule 610 est ajouté à l'entrée du registre à décalage et l'octet est ré-écrit dans la mémoire par la porte ET 618 dans le champ SDF.

Ceci se fait sous contrôle de la logique de commande LC 614 qui décide si le décalage doit avoir lieu ou non. Quand il n'y a plus d'information bit service, dans la bascule 609, c'est-à-dire qu'il n'y a pas de nouveau bit reçu du modem, il n'y a pas de décalage. De même, le décalage est supprimé pour la suppression des zéros dans les protocoles SDLC ou l'insertion des bits de départ et d'arrêt ce qui est indiqué dans le paramètre d'initialisation par la partie compteur de bits 1 en mode SDLC, en effet un zéro doit être supprimé chaque fois que cinq bits 1 sont reçus.

Si la logique de commande détecte par l'intermédiaire du compteur de bits contenu dans le SCF, qu'un caractère complet a été sérialisé, l'information caractère complet est transmise au sélecteur d'adresses, ligne 352 pour signaler que l'on veut transférer le caractère reçu au processeur 301 et qu'il faut adresser la mémoire A.

L'octet SDF est alors ré-écrit non pas dans la mémoire B par le bus 312 mais dans la mémoire A alors adressée par le sélecteur d'adresses dans la zone nouveau PDF de l'interface.

Au cours de ce temps S4 l'octet SCF est modifié s'il y a lieu: le compteur de bit est incrémenté; le bit changement état modem MC est ajouté ou les bits indiquant la réception de caractères spéciaux détectés par le circuit DEC CAR 619 dans les protocoles SDLC ou BSC sont ajoutés par l'intermédiaire du circuit d'incrémentation INC 620 et de la porte ET 621.

L'octet est ré-écrit dans la zone SCF de la mémoire B si le caractère n'est pas complet ou dans la zone SCF de la mémoire A si le caractère est complet.

Au temps S4, le contenu du registre 602 est modifié sous contrôle de la porte ET 622, selon le mode de calcul du code d'erreur CRC utilisé. Ce calcul sera décrit ultérieurement en référence à la figure 14.

Au temps S5, le demi-mot INIT/CMD est ré-écrit en modifiant les bits s'il y a lieu, lorsque la logique de commande a détecté par exemple que le caractère était en phase, c'est-à-dire que, en mode SDLC par exemple, cinq uns ont été reçus suivis d'un zéro ou que la fin du caractère a été détectée. Ceci est réalisé par la porte ET 623. Le compteur de uns situé dans l'octet INIT est incrémenté avant ré-écriture par le circuit d'incrémentation 624 et la porte ET 625 si le bit reçu est un 1. Le compteur est remis à zéro si le bit reçu est un 0.

La commande de restauration de la bascule 412-2 est envoyée par la logique de commande 614 et la porte ET 627 signifiant que le bit a été reçu et traité.

Au temps S6, le contenu modifié du registre 602 est ré-écrit dans la zone BCC1/BCC2 par l'intermédiaire de la porte ET 628.

En émission, les opérations suivantes se déroulent. Elles seront décrites en référence à la figure 12.

Au temps S0, le contenu du demi-mot BCC2/BCC1 est transféré dans le registre 602. Le demi-mot SDF/SCF est lu. Le bit «envoyé modem sortie» de ce demi-mot (bit 15) est envoyé par la logique de commande au sélecteur d'adresses (ligne 352). Ce bit s'il est présent permet de lire le demi-mot de configuration «modem-sortie empilée» au lieu de modem-sortie immédiate.

Au temps S1, le contenu de l'octet modem-sortie MOD SOR, soit empilé soit immédiat, est transféré dans le registre 604 par la porte ET 603. Le contenu du registre «modem-sortie» du circuit d'interface est transféré dans le registre 606. Le contenu de la bascule bit service 412-1 du circuit LIC est transféré dans la bascule 609 par la porte ET 607.

Au temps S2, les contenus des registres 604 et 606 sont envoyés au comparateur 613. La comparaison a lieu si le compteur CTR COMP dans la configuration MOD SOR est à 11, car il n'est pas nécessaire de faire cette comparaison à chaque cycle mais seulement tous les quatre cycles.

En cas d'inégalité, l'information de commande «vérification circuit d'attaque» est envoyée au sélecteur d'adresse (ligne 352).

Les demi-mots INIT/CMD et SDF/SCF sont lus permettant à la logique de commande 614 de décider des opérations à réaliser au temps suivant.

Au temps S3, le contenu du registre 604 est envoyé au registre du circuit LIC de l'interface balayé, par la porte ET 630 et réécrit dans l'octet modem-sortie après que le compteur de comparaison CTR COMP ait été incrémenté par le circuit 631 et la porte ET 615.

Si la logique de commande détecte un début de caractère: bit 2 de l'octet CMD à 1, elle le signale au sélecteur d'adresses par la ligne 352 qui permet alors l'écriture de l'octet SCF dans la mémoire A par la porte ET 632 et le bus 322. Si la logique de commande ne détecte pas un début de caractère c'est le demi-mot SDF/SCF qui est lu.

Au temps S4, le caractère contenu dans l'octet SDF est décalé d'un bit vers la droite par le circuit de décalage DECAL 617 et la porte ET 618 et ré-écrit en mémoire.

L'octet SCF est mis à jour, incrémentation du compteur de bit dans ce champ par le circuit INC 620 et ré-écrit en mémoire par la porte ET 621.

Au temps S5, le demi-mot INIT/CMD est mis à jour et réécrit par la porte ET 623.

Le bit de droite de l'octet SDF est envoyé au circuit LIC par la porte ET 633 ainsi que la commande de restauration de la bascule 412-1 indiquant que le bit a été envoyé.

Au temps S6 le demi-mot BCC2/BCC1 est réécrit après avoir été modifié au temps S4.

La logique de commande est un ensemble de portes ET et OU qui permet de réaliser la succession des différentes opérations en fonction des informations contenues dans les champs de commande SCF, paramètres d'initialisation, de commande et des bits d'informations reçues ou à envoyer.

Connaissant, les protocoles de transmission, cette logique de commande peut être réalisée par l'homme de l'art pour permettre le déroulement des opérations décrites.

Les portes ET qui ne sont utilisées que pour une des opérations réception ou émission sont conditionnées par les signaux indiquant le type de l'interface balayée venant du sélecteur d'adresses, par l'intermédiaire de la bascule 530.

On va maintenant décrire en référence à la figure 13, les opérations qui sont réalisées de façon spécifique suivant les différents protocoles.

PROTOCOLE BSC

La recherche de synchronisation dans ce protocole à la réception se fait en reconnaissant une configuration de 16 bits consécutifs. Cette configuration est placée par le microcode en mode asynchrone dans la mémoire B: Synchro 1, Synchro 2, demi-mot 4, pendant la phase d'initialisation. Dans le demi-mot INIT/CMD le bit 9 indique que cette configuration a été trouvée.

Lorsqu'on commence le balayage d'une ligne, la logique de commande vérifie si ce bit est présent. S'il ne l'est pas, le bit de données reçu de la ligne est envoyé dans le registre à décalage 602 au temps S4 par la porte ET 640, la logique de commande 614 indique au temps S4 par la ligne 352, de lire dans la mémoire B, le demi-mot SYN 2/SYN 1.

Au temps S5, ce demi-mot est envoyé vers le comparateur par la porte ET 641, ainsi que le contenu au registre 602 par la porte ET 642.

S'il n'y a pas égalité, le contenu du registre 602 est ré-écrit dans le demi-mot BCC2/BCC1 au temps S6 comme décrit précédemment.

Lorsque la ligne sera de nouveau balayée, le demi-mot BCC2/BCC1 est placé au temps S0 dans le registre 602, au temps S4 un nouveau bit est ajouté et une nouvelle comparaison aura lieu.

Lorsqu'une égalité sera détectée, la logique de commande placera dans l'octet de commande CMD le bit caractère en phase au temps S5 sous contrôle de la porte ET 643. Au temps S6 le contenu du registre 602 est écrit dans le demi-mot BCC2/BCC1 et le registre est effacé. Le demi-mot BCC2/BCC1 est ainsi prêt pour le calcul du CRC.

Au balayage suivant, la logique de commande trouvant le bit «caractère en phase» reprendra le fonctionnement normal d'assemblage des caractères dans le champ SDF comme décrit précédemment.

Lorsque la logique de commande décodera dans le champ SDF un caractère de fin de message elle ré-écrira l'octet de commande en effaçant le bit caractère en phase. En ré-écrivant le champ SCF au temps S4 la logique de commande ajoutera les bits «fin 1» à «fin 3» pour indiquer au microcode quel type de fin de message a été reçu.

On sera alors prêt à une nouvelle réception de message.

En émission, pour insérer des caractères de synchronisation, dans le message, le dispositif 301 n'alimente pas le dispositif 300 en caractère. Ce dernier détecte ce manque de caractère de la façon suivante.

Lorsque le dispositif 300 a pris le caractère dans le champ PDF, au temps S3, le champ SCF qui est écrit dans la mémoire A par la porte ET 632 (figure 12) comporte un bit «caractère service». Ce champ SCF est aussi écrit dans la mémoire B dans l'octet PCF. Lorsque le dispositif 301 vient écrire dans le demi-mot PDF/PCF (de la mémoire B) un autre caractère à transmettre, elle efface le bit caractère service dans le champ PCF.

Lorsque le dispositif 300 veut prendre ce nouveau caractère, la logique de commande vérifie que dans le champ PCF le bit «caractère service» est présent ou non si ce bit est absent cela signifie qu'un caractère à envoyer se trouve dans le champ PDF. Si ce bit est présent cela signifie qu'il n'y a pas de caractère à envoyer dans le champ PDF de la mémoire B.

La logique de commande 614 vérifie à chaque balayage le contenu du compteur de bits contenu dans le champ SCF. Lorsque ce compteur contient 111 cela veut dire que les bits de caractères ont été envoyés. Au temps S5, la logique de commande ré-écrit le champ CMD avec le bit «premier bit détecté» présent.

Au balayage suivant, trouvant ce bit la logique de commande va commander la lecture du champ PDF si le bit «caractère service» n'est pas présent dans le champ PCF ou de l'octet synchro SYN si ce bit est présent et que le bit X est absent dans l'octet de commande, ou l'octet «DLE» si le bit «caractère service» est présent dans le PCF et le bit X est présent dans l'octet de commande. Dans ces deux derniers cas, le bit «manque de caractère» sera ré-écrit dans l'octet de commande. Ce bit permet d'envoyer un deuxième caractère de synchronisation. Le bit «X» qui signifie «mode transparent» est écrit dans l'octet de commande lorsque le caractère pris dans le PDF est un caractère de départ en mode transparent. Il est effacé lorsqu'on décode un caractère de fin de transparence.

PROTOCOLE SDLC

Dans le protocole SDLC un zéro est inséré dans les bits de données chaque fois que cinq uns consécutifs ont été émis ceci pour éviter de confondre les données avec les configurations suivantes:

| Fanion | 01111110 |
| Abandon | 01111111 |
| Etat Inactif | 0111111111111111 |

utilisées comme caractères de contrôle.

Pour réaliser cette insertion, 3 bits de l'octet INIT sont utilisés pour compter les uns successifs envoyés en ligne.

Lorsque la logique de commande détecte que ce compteur est à 5, si le bit «pas d'insertion de zéro» n'est pas présent dans le SCF elle arrête le décalage du champ SDF. Un zéro est donc envoyé en ligne et le compteur de bits n'est pas incrémenté.

– En réception, lorsque la logique de commande détecte que le compteur de 1 est à 5 et que le bit reçu est un zéro, elle stoppe le décalage, le bit 0 reçu n'est donc pas assemblé.

– En réception, les configurations de fanion, abandon, état inactif, sont détectées de la façon suivante. Lorsque la logique de commande détecte que le compteur de 1 est à 6, si le bit reçu est un zéro, elle détecte la configuration fanion, si c'est un 1 elle détecte la configuration abandon si le bit «abandon» n'est pas dans l'octet de commande ou la configuration état inactif si le bit abandon est présent. La logique de commande place alors dans le SCF la combinaison correspondante des bits de fin.

PROTOCOLE ARYTHMIQUE S/S

Dans ce protocole les bits 6 et 7 du champ INIT ne servent plus au comptage de 1 mais indique la longueur du caractère.

Lorsque la logique de commande détecte le début d'un caractère, bit «premier bit détecté» présent dans l'octet de commande, elle arrête le décalage ce qui provoque l'envoi d'un zéro en ligne bit départ. Lorsque la logique de commande détecte la fin d'un caractère (compte de bits dans le champ SCF = longueur du caractère indiqué dans le champ d'initialisation) elle écrit dans l'octet de commande le bit «phase STOP».

Au balayage suivant, la logique de commande détecte ce bit et arrête le décalage et force un 1 en ligne. Si le bit longueur de code arrêt est à 0 dans l'octet INIT le bit phase STOP est effacé de l'octet de commande. Si le bit longueur du code arrêt est à 1, le bit phase STOP n'est pas effacé et le compteur de bits est incrémenté. Au balayage suivant trouvant le compteur de bit à 1, la logique de commande envoie de nouveau un 1 en ligne, elle efface le bit phase STOP et met à 1 le bit «premier bit détecté».

Au balayage suivant on recommence la séquence.

En réception, le premier bit zéro reçu est considéré comme un bit de démarrage. La logique de commande écrit le bit «caractère en phase» dans l'octet de commande CMD. Ce bit zéro n'est pas accumulé.

Au balayage suivant trouvant le bit «caractère en phase», la logique de commande accumule les bits reçus jusqu'à ce que le compteur de bits soit égal à la longueur du caractère. A ce moment le bit «phase STOP» est écrit. Au balayage suivant, la logique de commande détecte que ce bit est présent, elle arrête le décalage, vérifie que le bit reçu est un 1, bit du code arrêt et efface le bit caractère en phase. Si le bit reçu n'est pas un 1 la logique de commande écrit dans l'octet SCF, la combinaison des bits de fin signifiant «arrêt vérification».

Le bit caractère en phase étant effacé on attend la réception d'un nouveau bit du code départ (zéro) pour recommencer la séquence.

Sur la figure 14 on a représenté comment est utilisé la logique 308 du circuit 300 pour vérifier le CRC en mode BSC et en mode SDLC.

– MODE BSC

Dans le protocole BSC, le CRC est vérifié par comparaison octet par octet entre le CRC reçu de l'émetteur et le CRC recalculé à la réception. Lorsque la logique de commande 614 détecte par l'intermédiaire du circuit de décodage de caractère DEC CAR 619 que le caractère reçu est un caractère de fin de message, elle écrit dans l'octet de commande les bits X et N à 1. Ainsi la logique de commande 614 sait, lors des balayages suivants, que le caractère en cours de réception est le premier octet du CRC.

A la fin de la réception de ce caractère compteur de bit CTR1 = 111 au temps S4 le champ SDF décalé est ré-écrit par l'intermédiaire du circuit ET 618, et envoyé au comparateur par l'intermédiaire de la porte ET 650 conditionnée par la logique de commande et S4. En même temps l'octet 1 du registre 602 où se calcule le CRC à la réception sera aussi envoyé au comparateur COMP 613 par la porte ET 651 conditionnée par la logique de commande, par S4, et le signal d'indication de mode BSC.

S'il y a égalité le premier octet du CRC est bon, en cas d'inégalité, la logique de commande 614 écrit dans l'octet de commande le bit C à 1. Elle écrit également le bit D de l'octet INIT à 1.

Au prochain balayage, trouvant les bits D, N et X à 1, la logique de commande sait que le caractère en cours de réception est le deuxième octet du CRC.

A la fin de la réception de ce caractère au temps S4, le champ SDF et l'octet 1 du registre 602 sont envoyés au comparateur. Au temps S5, les bits C, D, N et X sont écrits à 0.

Si le bit C était à 1 ou si la comparaison est mauvaise, au temps S4, la logique de commande écrit dans le SCF la combinaison des bits de fin E1, E2, E3 indiquant CRC erreur par l'intermédiaire de la porte ET 621.

– PROTOCOLE SDLC

Dans ce protocole, lorsque la logique de commande détecte un fanion de fin, bit CP (caractère en phase) à 1 dans l'octet de commande, compteur de 1 à 110, bit reçu 0, le contenu du registre 602 est comparé à la valeur hexadécimale FOB8 au temps S4 par l'intermédiaire du comparateur COMP 652 et de la porte ET 653 qui est conditionnée par la logique de commande bit CP = 1, CTR1 = 110 et bit reçu = 0, par l'indication de mode SDLC et par S4.

Selon le résultat de cette comparaison la logique de commande écrit dans le SCF les bits de fin correspondant à vérification CRC pas d'erreur ou vérification CRC erreur.

Le dispositif 301 permet d'échanger les données et informations de commande (paramètre de commande et informations d'état) au niveau multiplet (8 bits) ou demi-mots (16 bits) entre la mémoire de commande qui est aussi accessible par le microprocesseur et le dispositif 300 qui assure la commande de liaison des données au niveau bit.

Il a donc pour fonction de faire l'interface avec le microprocesseur, à la fois pour le chemin asynchrone: phase d'initialisation et par le chemin synchrone: opération de vol de cycle.

Il provoque les interruptions du microprocesseur pour gérer les erreurs et gestion des zones de la mémoire du microprocesseur affectées aux interfaces.

Il contient les informations d'adresses pour l'adressage de la mémoire du microprocesseur pour l'écriture et la lecture de cette mémoire pour les opérations en vol de cycle.

Pour chaque ligne il apporte l'assistance du compteur de temps dans l'octet 1 CTR TPS du demi-mot 4 de la mémoire A.

Les différentes tâches à effectuer sont les suivantes:
– acquisition de toutes les informations relatives à l'interface, dans la mémoire A,
– remise à zéro du champ SCF relatif à un caractère bien précis pour ne pas refaire deux fois le même travail,

- mise à jour des informations dans les paramètres de commande en tenant compte des informations reçues dans le champ de contrôle SCF,
- stocker le caractère reçu NPDF dans le champ SPDF pour que deux caractères soient disponibles étant donné que la communication avec le dispositif 300 se fait par caractère alors que la communication avec le microprocesseur se fait par demi-mot,
- gérer l'échange des informations avec le dispositif 300,
- mise à jour du champ d'adressage SA,
- traitement des interruptions de fonctionnement et les erreurs,
- incrémentation du compteur de temps CTR IPS s'il y a lieu,
- transfert des demi-mots reçus au microprocesseur par vol de cycle,
- écriture d'un demi-mot de contrôle,
- information d'état dans la mémoire du microprocesseur de tous les quatre demi-mots transférés pour relater les événements qui ont pu arriver durant le transfert des donnés. Le format des informations d'état est le suivant:
- transfert d'un demi-mot de commande du microprocesseur pour le prochain échange de caractère et écriture de ce demi-mot dans la mémoire A à la place des anciens paramètres de commande.

Définition du champ Information d'Etat

. Interface «Emission»

Bit 0 = 1, Bloc valide.

Ce bit signifie que les données contenues dans le bloc ont été envoyées et que le bloc peut être réutilisé par le microcode de commande pour mettre d'autres données.

Bit 2 Une interruption avait été demandée par le code de commande (via paramètres).

Bits 5, 6, 7 Compte de données transmises.

Bit 9 10 Service normal.

Bit 10 11 caractère manquant

Bit 11 Changement contenu Registre «Modem-entrée». Ce bit indique qu'un changement du contenu du registre «modem-entrée» s'est produit pendant le traitement de ce bloc. Une information d'état est immédiatement envoyée et une interruption est immédiatement demandée.

Bit 12 = EOT (fin de transmission. Ce bit est mis à 1 si le dispositif de balayage 7 a traité un bloc avec une information de fin de message (EOM) dans le champ de paramètre correspondant.

. Interface «Réception»

Bit 0 Bloc valide.

Le dispositif de balayage 7 met ce bit à 1 lorsque l'information d'état est transférée par vol de cycle afin d'informer le code de commande que le bloc associé a été rempli. Les données peuvent être utilisées par le microcode de commande.

Bit 2 Une interruption a été demandée par le code de commande par l'intermédiaire des paramètres de commande.

Bits 5, 6, 7 Compte des données reçues dans ce bloc.

Bits 8, 12, 13 si 000 données intermédiaires.
si 001 fin de réception sans erreur de vérification CRC.
101 fin de réception avec erreur de vérification CRC.
011 limite fanion mal cadrée.
100 abandon (le message commencé est mauvais, ne pas le prendre en compte).
110 état inactif (la ligne est retombée dans un état de repos).

Bits 9, 10 si 10 service normal.
si 11 caractère perdu (débordement).

Le fonctionnement du dispositif 301 se décompose en sept périodes élémentaires S0 à S6 de 200ns pouvant se répéter jusqu'à huit fois à chaque balayage d'interface comme représenté sur le diagramme des temps sur la figure 8.

Ainsi qu'il a déjà été dit, pour chaque ligne on balaie d'abord l'interface réception puis l'interface émission.

Le travail du dispositif 301 à chaque balayage se décompose en cinq phases. Durant trois de ces phases des accès en vol de cycle ont lieu avec la mémoire du microprocesseur. Ces phases ont donc des durées variables.

Le schéma détaillé de la logique 316 est représenté sur la figure 15.

Le comptage des phases de travail est réalisé au moyen des bascules 700 et 701 qui sont des bascules JK du type maître-esclave et du compteur CTR 703. Le compteur 703 a quatre sorties utilisées pour définir les périodes de travail P0, P1, P2, P3.

Lorsque le compteur est à 00 (phase P0) au temps S5, la bascule DEPART L700 est enclenchée par la porte ET 704. Cette bascule prévient le sélecteur d'adresses par le fil 352 que le dispositif 301 est prêt à travailler sur un nouvel interface.

Au temps S0 suivant, une nouvelle adresse est envoyée à la mémoire A par le sélecteur d'adresses.

Au temps S5 suivant la bascule 701 appelée ENVELOPPE pour des raisons qui seront expliquées par la suite est enclenchée par l'intermédiaire de la porte OU 705 et de la porte ET 706.

Au temps S6 suivant, le compteur CTR 703 est incrémenté par l'intermédiaire de la porte ET 707. La bascule 701 est remise à zéro au temps S3.

Durant cette phase, la logique de commande 708 peut décider de lancer une phase de vol de cycle CS REQ.

Alors la bascule 709 de demande de vol de cycle est enclenchée et le signal de commande de demande de vol de cycle est envoyé au microprocesseur par la ligne 354.

A la fin du cycle volé le microprocesseur vient remettre à zéro la bascule 709 par un signal de fin de vol de cycle CS GO sur la ligne 356.

Tant que la bascule 709 est enclenchée, la bascule L 701 ne peut être enclenchée par l'intermédiaire de l'inverseur N 710 et de la porte ET 706.

Dès que la bascule 709 est remise à zéro, au prochain temps S5, la bascule 701 est enclenchée faisant avancer le compteur 703 à 2 (phase P2).

Au temps S3, la bascule 701 est remise à zéro.

Durant cette phase, une période de vol de cycle peut avoir lieu. Au temps S5 quand la bascule 709 est à zéro, la bascule 701 est de nouveau enclenchée et le compteur CTR 703 passe à 3 (phase P3). Durant cette période également peut avoir lieu une période de vol de cycle. Au temps S3, la bascule 701 est remise à zéro.

Elle sera ré-enclenchée en S5 quand la bascule 709 sera remise à zéro faisant passer le compteur 703 à 0 (retour à PO).

La bascule L 701 sera remise à zéro en S3. Au temps S5, le compteur à 0 empêche cette bascule d'être ré-enclenchée. Par contre, ce sera la bascule 700 qui le sera, ce qui fera démarrer le balayage d'un nouvel interface.

Les bascules 700 et 701 sont du type maître-esclave et en conséquence ne peuvent être démarrées simultanément.

Les bascules maîtres sont actionnées par l'horloge CK et les esclaves par l'horloge CJ.

Temps
Elémentaire 204 ns
! ————————————— !

! 68 ns !
  ———
   CK        ! 68 ns !
              ———
               CJ

Une commande de saut venant de la logique de commande 708 permet au compteur CTR 703 de passer directement de la phase 1 à la phase 3 sautant la phase 2. Ceci se produit lorsque le bit «service caractère» n'est pas présent dans le champ SCF, ce qui signifie qu'il n'y a pas de demande de caractère venant du dispositif 300, rendant inutile la phase d'écriture des informations d'états.

Sur la figure 15 les signaux EMI et REC sont ceux fournis par le compteur d'adresses 502.

Les champs de la mémoire A relatifs à l'interface balayé sont représentés sur la figure 15, ils sont écrits par le fil 320 et lu par le fil 318.

Phase de démarrage
    CTR 703   = 0   Phase PO
et Bit Départ = 1

Cette phase a lieu lorsque le compteur 703 est à 0 et la bascule 700 est enclenchée. Durant cette phase, au temps S0, on lit le champ SCF de la mémoire A et on le charge dans le registre 712 par l'intermédiaire de la porte ET 713, conditionnée par SO, PO et la sortie ST de la bascule de départ 700, le champ NPDF de cette même mémoire est écrit dans le registre 714 par l'intermédiaire de la porte ET 715.

Au temps S1, on ré-écrit en l'effaçant le champ SCF pour ne pas recommencer les mêmes opérations pour une même interface, par l'intermédiaire de la logique de commande 708 et de la porte ET 716, conditionné par S1, PO et ST.

Au temps S2 on lit l'adresse de la zone de la mémoire de commande affectée à l'interface de la ligne balayée, champ SA. Cette adresse est chargée dans le registre 717 par l'intermédiaire de la porte ET 718. Au temps S5, on lit le champ SPDF que l'on charge dans le registre 719 par l'intermédiaire de la porte ET 720.

Phase de gestion des données:
    CTR 703   = 1 (Phase P1)
et ENVELOPPE = 1 (Sortie L 701: E = 1)

Durant cette phase, on lit au temps S0, le champ de la mémoire A contenant les paramètres de commande PARAM. Au temps S1 on ré-écrit ce champ par l'intermédiaire de la porte ET 721, la logique de commande ayant réalisé les opérations suivantes:
— effacement du bit de départ s'il était présent,
— modification du bit indicateur PDF, afin de compter le nombre de caractères traités,
— écriture du bit changement état Modem si ce bit a été lu dans le champ SCF.

Si l'indicateur PDF a été trouvé à 0 il sera ré-écrit à 1, ce cas signifie en émission que le champ SPDF contient un caractère à donner au dispositif 300. En réception, cela signifie que le dispositif 300 n'a donné qu'un seul caractère, celui-ci se trouve dans le champ NPDF et sera transféré dans le champ SPDF à la phase suivante. Si l'indicateur PDF a été trouvé à 1, il sera ré-écrit à 0, ce cas signifie en émission que le caractère du champ SPDF a déjà été envoyé au dispositif 300. Une procédure de vol de cycle est alors mise en marche pour acquérir deux nouveaux caractères.

En réception, cela signifie que le dispositif 300 a donné deux caractères, l'un dans le champ SPDF, l'autre étant dans le champ NPDF.

Une procédure de vol de cycle est mise en route pour transférer ces deux caractères au microprocesseur.

Le contenu du registre d'adresses 717 est envoyé sur le bus d'adresses 17 par la porte ET 722 conditionnée par le signal de vol de cycle CS; le bus de données 16 est relié à l'entrée des registres 723, 724 en émission par l'intermédiaire de la porte ET 725 conditionnée par le signal de VOL DE CYCLE CS, P1 et d'indication d'opération d'émission EMI. En réception, il est relié à la sortie des registres 714 et 719 par l'intermédiaire de la porte ET 726 conditionnée par le signal CS, P1 et l'indication d'opération de réception REC.

Phase de gestion des informations d'état
    compteur CTR 703   = 2 (Phase P2)
    et ENVELOPPE = 1

Cette phase n'a lieu que si la logique de commande trouve dans le champ SCF contenu dans le registre 712 le bit «service caractère». Ce bit signifie que le dispositif 300 demande un nouveau caractère en émission ou a placé un nouveau caractère dans le champ NPDF en réception.

En réception au temps S0, le champ NPDF qui se trouve dans le registre 714 est ré-écrit dans le champ SPDF par l'intermédiaire de la porte ET 727 conditionnée par S0, P2 et le signal REC.

En émission, les données à transmettre qui se trouve dans le registre 724 sont écrites dans le champ SPDF par la porte ET 728 conditionnée par S0, P2, EMI.

En réception, au temps S1, un octet ne comportant que des zéros est écrit dans le champ PDF de la mémoire B du dispositif 300 par la logique de commande 708 et la porte ET 729.

En émission au temps S1 le caractère reçu dans le registre 723 est écrit dans le champ PDF de la mémoire B par l'intermédiaire de la porte ET 730 conditionnée par les signaux EMI, S1, P2.

Pour les deux interfaces au temps S2, l'adresse contenue dans le registre 717 est incrémentée par l'intermédiaire du dispositif d'incrémentation INC 731 et de la porte ET 732 conditionnée par S2 et P2. On ajoute +1 à chaque transfert de demi-mot.

Au même temps S2, la logique de commande écrit dans le registre 734 par l'intermédiaire de la porte ET 735 conditionnée par S2 et P2, les informations d'état à envoyer au microprocesseur à partir des informations trouvées dans le champ SCF.

La logique de commande compare les deux derniers bits de l'adresse avec les bits 5 et 6 du demi-mot PARAM (longueur du bloc). Le bit 7 de ce demi-mot est comparé avec le bit indicateur PDF. Cette comparaison indique si on a rempli en réception ou vidé en émission la zone mémoire dans la mémoire du microprocesseur affectée à l'interface.

Dans ce cas, il faut écrire une information d'état dans la mémoire du microprocesseur. L'adresse à laquelle il faut faire cette opération est obtenue à partir de l'adresse contenue dans le registre 717 par un simple décalage 736 sous contrôle de la logique de commande.

La logique de commande met en route une procédure de vol de cycle et envoie vers le bus de données le contenu du registre 734 par l'intermédiaire de la porte ET 737 conditionnée par les signaux CS, P2 et vers le bus d'adresse, la sortie du registre 717 décalée par le circuit 736.

Une information d'état sera également écrite avant la fin d'une zone mémoire dans les conditions suivantes:
— En réception une combinaison de bits de fin E1, E2, E3 est trouvée dans le champ SCF ou le bit changement état modem MC est trouvé dans le SCF.
— En émission le bit MC est trouvé dans le champ SCF.

Phase de gestion des paramètres:
    compteur CTR 703 = 3 (Phase P3)
       et ENVELOPPE = 1

Au temps S0 on lit l'octet de demande d'interruption DEM.INT. qui contient les erreurs qui se sont produites sur cet interface.

Cette lecture est réalisée par l'intermédiaire de la porte ET 738 conditionnée par S0, P3. Si un des bits indique une erreur, la logique de commande déclenche la procédure d'interruption en envoyant au dispositif de sélection d'adresses l'information «chargement Registre Erreur» par le fil 352.

Au temps S1, l'information contenue dans l'octet DEM INT est écrite dans le registre externe 8-6 par le fil 334 et en même temps est ré-écrite dans l'octet DEM INT par la porte ET 709 conditionnée par S1 et P3.

Si le registre externe 8-6 est libre, l'octet DEM INT est ré-écrit tel quel. Si ce registre est déjà occupé par une interruption venant d'un autre interface, interruption qui n'a pas encore été traitée par le microprocesseur, le dispositif de sélection d'adresses envoie au dispositif 301 l'information «PILE OCCUPEE». A ce moment, le champ DEM INT n'est pas envoyé au registre externe d'erreur et le bit «Interruption en Attente» est mis à 1 dans ce champ.

Format de champ DEM. INT.

| Réception | | | | | |
|---|---|---|---|---|---|
| Si Bit 8 | 0 interruption normale | | Si Bit 8 | 1 interruption due à une erreur | |
| Bit 9 | 1 débordement | | Bit 9 | 1 erreur due au LIC | |
| Bit 11 | 1 changement modem | | Bit 11 | 1 erreur due au dispositif de balayage | |
| | | | Bit 12 | 1 erreur sur les bus d'interface 16, 17 | |

Bit 13    Interruption en attente

Emission

| | | | | | |
|---|---|---|---|---|---|
| Si Bit 8 | 0 | interruption normale | Si Bit 8 | 1 | interruption due à une erreur |
| Bit 9 | 1 | manque de ca-ractères | Bit 9 | 1 | erreur due au LIC |
| Bit 10 | 1 | expiration du temps | Bit 10 | 1 | DRC vérifica-tion circuit d'attaque |
| Bit 11 | 1 | changement état modem | Bit 11 | 1 | erreur sur le bus d'interface 16, 17 |

Bit 13   interruption en attente

Au prochain balayage ce bit déclenchera à nouveau une procédure d'interruption jusqu'à ce que le registre externe d'erreur soit libre.

La logique de commande peut ensuite déclencher une procédure de vol de cycle pour acquérir un nouveau paramètre. Les conditions sont les mêmes que pour l'information d'état. A chaque fois que l'on a écrit une information d'état on doit lire un nouveau paramètre. Ce paramètre sera stocké dans le registre 741, en provenance du microprocesseur ligne 16 par l'intermédiaire de la porte ET 740 conditionnée par le signal CS (VOL DE CYCLE et P3).

Phase de ré-écriture de paramètres:
    compteur CTR 703 = 0
    et ENVELOPPE = 1

Au temps S0, le contenu du registre 741 est écrit dans le demi-mot PARAM par l'intermédiaire de la porte ET 742. En réception le champ compteur de temps CTR TPS sera lu et écrit dans le registre 743 par l'intermédiaire de la porte ET 745 conditionnée par les signaux REC, S0, E, PO. La logique de commande va l'incrémenter au temps S2 par l'intermédiaire de la porte ET 746 conditionnée par les signaux E, PO, S2, REC. Le champ CTR TPS a le format suivant:

| Demi-mot | Bit | 8: | Travail |
|---|---|---|---|
| 4 | | 9: | Mode |
| | | 10: | Service |
| | | 11 à 15: | Comptage |

L'incrémentation est réalisée suivant l'horloge indiquée par le bit «MODE».

Si ce bit est à 0, le compteur de temps est incrémenté chaque fois que l'horloge du contrôleur 100 ms passe à 1, si ce bit est 1, on prend l'horloge 2 ms.

Le bit «travail» est utilisé pour indiquer que le passage à 1 de l'horloge a déjà incrémenté le compteur de temps. Il sera remis à zéro lorsque l'horloge passera à 0.

Le compteur de temps est utilisé par le microcode. Celui-ci charge dans la partie «comptage» bit 11 à 15 la valeur complémentaire au temps désiré et l'incrémentation va être réalisée jusqu'à la valeur 11111. Le contenu du registre 743 va être conservé pendant le balayage de l'interface suivant qui est toujours l'interface émission de la même ligne. Lors du traitement du champ demande d'interruption de cette interface si la valeur des bits 11 à 15 du registre 743 est 11111, l'information «expiration du temps» sera écrite dans le champ «demande interruption» et le registre externe 8-6. Le microcode sera prévenu que le temps demandé est écoulé.

Les commandes de lecture R et d'écriture W des mémoires A, B et C sont représentées dans les tableaux ci-après. En ce qui concerne la mémoire A, les commandes ont été reportées aux instants appropriés sur le diagramme des temps de la figure 8.

Ces commandes sont générées par le dispositif 503 pour déclencher les opérations de lecture et d'écriture R/W des mémoires A, B, C dans les positions sélectionnées par le circuit de multiplexage 505.

Commande de mémoire A

| Phase | S0 | S1 | S2 | S3 | S4 | S5 | S6 |
|---|---|---|---|---|---|---|---|
| Phase P0 Bascule Départ enclenchée | R1 SCF+NPDF (HW1 B0, B1) | W1 (HW1 Restaurer caract. Service | R3 SA (HW3 B0, B1) | | | R2 SPDF (HW2 B0) | |
| Phase P1 | R4 paramèt. (HW4 B0, B1) | | W4 paramèt. (HW4 B0, B1) | | | | |

| Phase | S0 | S1 | S2 | S3 | S4 | S5 | S6 |
|---|---|---|---|---|---|---|---|
| **Vol cycle données** | | | | | | | |
| Phase P2 | W2<br>PDF<br>NPDF →<br>SPDF<br>(HW1<br>B0) | WB<br>ECR.MEM B<br>PDF + SCF<br>à 300 en<br>EMI<br>→ PCF à<br>300 en REC | W3<br>mise à jour<br><br>(HW3<br>B0, B1) | | | | |

| Phase | S0 | S1 | S2 | S3 | S4 | S5 | S6 |
|---|---|---|---|---|---|---|---|
| **Vol de cycle information état** | | | | | | | |
| Phase P3 | R2<br>lire<br>(HW2<br>B1) | W2<br>contrôle<br>Interruption | | | | | |
| **Vol de cycle paramètre** | | | | | | | |
| Phase<br>P0<br>Bascule<br>D<br>Départ<br>à<br>zéro | R<br>E<br>C | R4<br>lire<br>(HW4<br>B1) | | W4<br>ou W<br>param.<br>Mettre à jour<br>CTR.TPS<br>et/ou<br>écrire<br>PARAM. | | | |
| | E<br>M<br>I | WP<br>Ecrire<br>param.<br>reçus en<br>vol de cycle<br>2 octets | R'4<br>lire<br>(HW4<br>B1) | W'4<br>Mettre à jour<br>(HW4<br>B1) | | | |

Travail synchrone du dispositif 300
Commande des mémoires B et C
Interface Réception

| | | S0 | S1 | S2 | S3 | S4 | S5 | S6 |
|---|---|---|---|---|---|---|---|---|
| Mémoire B | Lecture | PCF<br>(HW2<br>B1) | | SCF<br>(HW1<br>B1) | SDF-SCF<br>ou<br>PDF-PCF<br>ou<br>SYNCHR.<br>(HW1, 2<br>ou 4<br>B0, B1) | | | |
| | Ecriture | | du<br>dispos. 301<br>PCF<br>(HW2<br>(B1) | | | SDF-SCF<br>ou<br>PDF-PCF<br>(HW1, 2<br>B0, B1) | | |

| | | S0 | S1 | S2 | S3 | S4 | S5 | S6 |
|---|---|---|---|---|---|---|---|---|
| Mémoire C | Lecture | CRC (HW2 B0, B1) | MODEM ENTRÉE (HW3 B0, B1) | INITIAL. et (HW1 B0, B1) | | | | |
| | Ecriture | | | | MODEM ENTRÉE (HW3 B0) | | INITIAL. et COMMAND. (HW1 B0, B1) | CRC (HW2 B0, B1) |

Travail synchrone du dispositif 300
Interface Emission

| | | S0 | S1 | S2 | S3 | S4 | S5 | S6 |
|---|---|---|---|---|---|---|---|---|
| Mémoire B | Lecture | SDF SCF Demi-mot HW1 B0, B1 | | PDF PCF HW2 B0, B1 | SDF HW1 ou DLE HW3 ou SYN HW4 (B0) | | | |
| | Ecriture | | Du dispos. 301 PDF PCF HW2 B0, B1 | | PCF HW2 B1 | SDF SCF HW1 B0, B1 | | SCF si manque caract. EOT HW1 B1 |
| Mémoire C | Lecture | CRC HW2 B0, B1 | MODEM SORTIE HW3 ou 4 B0, B1 | INITIAL. SATION HW1 B0, B1 | | | | |
| | Ecriture | | | | MODEM SORTIE HW3 B0 | | INITIALI- SATION et COMMAND. HW1 B0, B1 | CRC HW2 B0, B1 |

= demi-mot; B = octet

## Revendications

1. Dispositif de balayage de lignes (7) destiné à travailler sous contrôle d'un microprocesseur (1) qui est associé à une mémoire de commande (2) dans laquelle une zone de position mémoire est affectée à chaque ligne, ledit dispositif de balayage et le microprocesseur étant destinés à faire partie d'un adaptateur de ligne (LA) pour un contrôleur de communication (CC) qui reçoit ou envoie des bits de message sous forme série à des terminaux (T) connectés aux lignes, ledit dispositif de balayage étant caractérisé en ce qu'il comprend la combinaison d'éléments suivants:

un premier moyen d'emmagasinage (306) comprenant une première mémoire (B) dans laquelle une zone de positions d'emmagasinage est attribuée à chaque ligne, ladite mémoire B étant affectée à la fonction de service des bits, et une seconde mémoire (C) dans laquelle une zone de positions d'emmagasinage est attribuée à chaque ligne, ladite mémoire étant affectée à la fonction de service de lignes, les deux mémoires (B et C) pouvant être lues et écrites simultanément,

un second moyen d'emmagasinage (314) comprenant une troisième mémoire (A) dans laquelle une zone de positions d'emmagasinage est attribuée à chaque ligne, ladite mémoire étant affectée à la fonction de service de caractères,

un moyen de contrôle et d'adressage (303) comportant des premier et second compteurs d'adresses (501 et 502) placés sous contrôle d'un compteur de temps élémentaire (500), le premier compteur générant sur sa sortie pendant le temps t, donc au temps bit du balayage d'une ligne, l'information d'adresse des première (B) et seconde (C) mémoires et le second compteur générant sur sa sortie pendant un temps égal à nt avec n égal à au moins 4, donc au temps caractère, l'information d'adresse de la troisième mémoire (A), la première mémoire (B) recevant les informations d'adresse destinées à la troisième mémoire (A) et vice versa, respectivement aux temps spécifiques, et des moyens de commande (500, 503, 505) recevant lesdites informations d'adresses et les informations de temps élémentaires pour fournir sur les sorties (324, 352) du moyen de contrôle et d'adressage les informations d'adresses et de commande de lecture/écriture en des temps sélectionnés pendant la période de balayage, et séquentiellement les adresses des lignes présente balayées,

un premier circuit logique de traitement et de supervision (308) fonctionnant au temps bit comprenant des moyens de désérialisation/sérialisation (617, 614) des bits, pour recevoir ou envoyer à chaque période de balayage, un bit de message, ce circuit étant connecté d'une part aux lignes (348) et d'autre part aux première (B) et seconde (C) mémoires par un premier bus de lecture (310) et un premier bus d'écriture (312) et à la troisième mémoire par un second bus d'écriture (322) de façon que les informations dans les zones de positions d'emmagasinage adressées des première et seconde mémoires puissent être lues, traitées et ré-écrites, modifiées ou non, en fonction du bit reçu ou à envoyer, et de façon que les caractères complets qui ont été assemblés des bits reçus des lignes dans la première mémoire (B) puissent être transmis à la troisième mémoire (A),

un second circuit logique de traitement et de supervision (316) fonctionnant au temps caractère comprenant des moyens (723, 724, 714, 719, 726, 725) d'assemblage de caractères en demi-mot et de désassemblage de demi-mot en caractères, connecté d'une part à la mémoire de commande par un bus d'adresse (17) et un bus de données (16) et d'autre part à la troisième mémoire (A) par un second bus de lecture (318) et un troisième bus d'écriture (320) et à la première mémoire (B) par le second bus d'écriture (322) pour échanger les messages en vol de cycle entre la mémoire de commande et les zones adressées des première et troisième mémoires.

2. Dispositif selon la revendication 1, caractérisé en ce que chaque zone de positions d'emmagasinage de la première mémoire (B) emmagasine au moins un caractère reçu une fois sérialisé par le premier circuit logique et au moins un caractère à transmettre avant sérialisation, ainsi que des informations de contrôle de transmission (SCF, PCF) et de synchronisation, et chaque zone de positions d'emmagasinage de la seconde mémoire (C) emmagasine des informations de service de lignes et de caractères, des informations de contrôle (MOD EN, MOD SOR) et des paramètres d'initialisation caractéristiques de la ligne.

3. Dispositif selon la revendication 1 ou 2, caractérisé en ce que chaque zone de positions d'emmagasinage de la troisième mémoire (A) contient les caractères de message à échanger avec la mémoire de commande du microprocesseur, des informations de gestion de transmission (SCF), des paramètres de commande de transmission et l'information d'adresses (SA) de la zone de mémoire de commande du microprocesseur affectée à la ligne.

4. Dispositif selon l'une quelconque des revendications 2 à 3 caractérisé en ce que le moyen de contrôle et d'adressage comprend une pluralité de registres (8), qui servent de registres externes au microprocesseur, un premier registre étant un registre d'adresses de lignes dont le contenu est amené au moyen de commande du moyen de contrôle et d'adressage de façon que le microprocesseur puisse communiquer en mode asynchrone avec le dispositif de balayage.

5. Dispositif selon la revendication 4, caractérisé en ce que:

le premier registre est chargé avec l'adresse d'une ligne,

un second registre est chargé par le microprocesseur, en mode asynchrone avec les paramètres d'initialisation caractéristiques de la ligne dont l'adresse est chargée dans le premier registre pour charger séquentiellement dans la seconde mémoire (C) dans chaque zone le paramètre d'initialisation caractéristique de la ligne correspondante.

6. Dispositif selon la revendication 5 caractérisé en ce que chaque zone de la troisième mémoire (A) comprend une position réservée à l'emmagasinage des demandes d'interruption résultant de la détection d'erreurs, et

un troisième registre externe est un registre d'erreur dans lequel peut être chargée en mode asynchrone la condition d'erreur pour être reportée au microprocesseur.

7. Dispositif selon l'une quelconque des revendications précédentes caractérisé en ce que:

chaque ligne comporte une interface réception et une interface émission, le balayage d'une ligne commençant par le balayage de l'interface réception puis celui de l'interface émission, les zones de positions d'emmagasinage dans chacune des mémoires comprenant des positions attribuées aux interfaces réception et des positions attribuées aux interfaces émission.

8. Dispositif selon la revendication 7, caractérisé en ce que le second circuit logique comprend des moyens pour diviser le temps nt en cinq périodes de travail comprenant:

un compteur de phases (703) fournissant sur ses quatre sorties des impulsions décalées dans le temps couvrant la période nt,

une bascule de départ (700) qui est enclenchée lorsque le circuit logique est prêt à travailler sur une nouvelle interface, lorsque l'impulsion sur la première sortie du compteur est à 1 et que la période de balayage précédente est terminée, et qui fournit sur sa sortie (352) une impulsion de départ.

9. Dispositif selon la revendication 8, caractérisé en ce que les moyens de commande du moyen de contrôle et d'adressage comprend:

ledit compteur de temps élémentaires (500) qui génére à partir d'impulsions d'horloge sur sa sortie (512) des impulsions de temps élémentaires (S0 à S6) couvrant la période de balayage,

un moyen de multiplexage (505) qui reçoit les informations d'adresses des premier et second compteurs, et du premier registre externe et les impulsions de temps élémentaires pour fournir sur ses sorties l'adresse des mémoires du premier moyen d'emmagasinage et de la mémoire du second moyen d'emmagasinage en des instants selectionnées,

un moyen de commande de lecture/écriture (503), qui reçoit les impulsions élémentaires et l'impulsion de départ générée par le second circuit logique de traitement et de supervision pour fournir les commandes de lecture et d'écriture à des instants sélectionnés pour réaliser les opérations nécessaires pour le traitement des messages.

10. Dispositif selon l'une quelconque des revendications 7 à 9 caractérisé en ce que le premier circuit logique comprend:

des moyens pour rechercher les caractères de synchronisation des messages reçus comprenant:

un registre à décalage (602) dans lequel les bits reçus sont stockés au début de chaque période de balayage de l'interface réception, et dont le contenu est ré-écrit dans la seconde mémoire à la fin du balayage à un emplacement qui est lu à la période de balayage suivante et stocké dans ledit registre,

un comparateur (613') pour faire la comparaison à chaque période de balayage entre le contenu du registre à décalage et l'information de synchronisation dans la zone de positions de la première mémoire attribuée à la ligne balayée,

des moyens (643, 614) pour détecter qu'il y a égalité à la sortie du comparateur pour écrire dans la zone de la première mémoire attribuée à la ligne dans les positions contenant les informations de commande de transmission un bit indiquant que la synchronisation a été trouvée.

11. Dispositif selon la revendication 9 ou 10 caractérisé en ce qu'il comprend:

des moyens pour gérer les fils de contrôle des modems faisant l'interface entre les terminaux et le dispositif de balayage, comprenant un comparateur (613) pour faire la comparaison entre la configuration des signaux sur les fils de contrôle associés à chaque ligne et les informations de contrôle dans la zone de la seconde mémoire attribuée à la ligne balayée et une bascule (616) connectée à la sortie du comparateur pour emmagasiner l'information de changement d'état des fils du modem qui sera écrite dans la zone de la première mémoire attribuéee à la ligne balayée.

**Claims**

1. A line scanning device (7) provided for working under the control of a microprocessor (1) associated to a control memory (2) in which a storage location area is assigned to each line, said scanning device and the microprocessor being provided as a part of a line adapter (LA) for a communication controller (CC) which receives or sends message bits in series to terminals (T) connected to the lines, said scanning device being characterized in that it includes the combination of the following elements:

a first storing means (306) comprising a first memory (B) in which a storage location area is assigned to each line, said memory (B) being assigned to the bit service function, and a second memory (C) in which a storage location area is assigned to each line, said memory being assigned to the line service function, both memories (B and C) being able to be read and written in the same time,

a second storing means (314) comprising a third memory (A) in which a storage location area is assigned to each line, said memory being assigned to the character service function,

a control and addressing means (303) comprising first and second address counters (501 and 502) under the control of an elementary time counter (500), the first counter outputting for time t, i.e. at the bit time of a line scanning, the address information of the first (B) and second (C) memories and the second counter outputting for a time equal to nt with n equal to 4 or above, i.e. at the character time, the address information of third memory (A), first memory (B) receiving the address information provided third memory (A) and conversely, at the specific times, respectively, and control means (500, 503, 505) receiving said address information and the elementary time information to provide at outputs (324, 352) of the control and addressing means, the address and read/write control information on times selected during the scanning period and, sequentially, the addresses of the line being scanned,

a first processing and monitoring logic circuit (308) operating at the bit time, comprising means (617, 614) for deserializing/serializing bits, for receiving or sending a message bit on each scanning period, this circuit being connected on the one hand, to lines (348) and on the other hand, to first (B) and second (C) memories through a first read bus (310) and a first write bus (312) and to the third memory through a second write bus (322) so that the information contained in the addressed storage location areas of the first and second memories can be read, processed and re-written, modified or not, in accordance with the bit received or to be sent, and so that the completed characters which have been assembled from the bits received on the lines in first memory (B) can be transmitted to third memory (A),

a second processing and monitoring logic circuit (316) operating at the character time, comprising means (723, 724, 714, 719, 726, 725) for assembling characters into half-words and disassembling half-words into characters, connected on the one hand to the control memory through an address bus (17) and a data bus (16) and on the other hand, to third memory (A) through a second read bus (318) and a third write bus (320) and to first memory (B) through second write bus (322) for exchanging the messages in cycle steal mode between the control memory and the addressed areas of the first and third memories.

2. A device according to claim 1 characterized in that each storage location area of first memory (B) stores at least one character received after it having been serialized by the first logic circuit and at least one character to be transmitted before it being serialized, as well as transmission and synchronization control information (SCF, PCF), and each storage location area of second memory (C) stores line and character service information, control information (MOD IN, MOD OUT) and set mode parameters of the line.

3. A device according to claim 1 or 2 characterized in that each storage location area of third memory (A) contains the message characters to be exchanged with the control memory of the microprocessor, transmission managing information (SCF), transmission control parameters and the information relating to the addresses (SA) of the microprocessor control memory area assigned to the line.

4. A device according to any one of claims 2 and 3 characterized in that the control and addressing means includes a plurality of registers (8) which are used as registers external to the microprocessor, a first register being a line address register the contents of which is applied to the means controlling the control and addressing means so that the microprocessor can communicate in asynchronous mode with the scanning device.

5. A device according to claim 4 characterized in that:

the first register is loaded with the address of a line,

a second register is loaded by the microprocessor in asynchronous mode with the set mode parameters characterizing the line the address of which is loaded in the first register for sequentially loading the set mode parameter characterizing the corresponding line into each area of second memory (C).

6. A device according to claim 5 characterized in that each area of third memory (A) comprises a location provided for storing interrupt requests resulting from the detection of errors, and

a third external register is an error register into which the error status can be loaded in asynchronous mode in order to be reported to the microprocessor.

7. A device according to any one of the above claims, characterized in that:

each line comprises a receive interface and a transmit interface, the scanning of a line starting with the scanning of the receive interface followed by the scanning of the transmit interface, the storage location areas in each memory including locations assigned to the receive interfaces and locations assigned to the transmit interfaces.

8. A device according to claim 7 characterized in that the second logic circuit comprises means for dividing time nt into five periods of work including:

a phase counter (703) providing at its four outputs, time-shifted pulses covering period nt,

a start latch (700) which is set when the logic circuit is ready to work on a new interface, when the pulse on the first output of the counter is set to 1 and that the preceding scan period is terminated and which provides a start pulse on its output (352).

9. A device according to claim 8 characterized in that the control means of the control and addressing means comprise:

said elementary time counter (500) which generates from clock pulses on its output (512), elementary time pulses (S0 to S6) covering the scanning period,

a multiplexing means (505) receiving address information from the first and second counters, and from the first external register and the elementary time pulses for outputting the address of the memories of the first storage means and of the memory of the second storage means on selected instants,

a read/write control means (503) which receives the elementary pulses and the start pulses generated by the second processing and monitoring logic circuit in order to provide the read and write commands on selected instants for executing the operations required for processing the messages.

10. A device according to any one of claims 7 to 9 characterized in that the first logic circuit comprises:

means for searching for the timing characters of the received messages, including:

a shift register (602) in which the bits received are stored at the beginning of each receive interface scanning period, the contents of said shift register being re-written into the second memory at the end of the scanning, into a location which is read during the next scanning period and stored into said register,

a comparator (613) for comparing during each scanning period, the contents of the shift register and the timing information in the location area of the first memory assigned to the scanned line,

means (643, 614) for detecting an equality at the comparator output in order to write a bit indicating that the timing has been found, into the area of the first memory assigned to the line into the locations containing the transmission control information.

11. A device according to claim 9 or 10 characterized in that it comprises:

means for managing the control wires of the modems arranged as an interface between the terminals and the scanning device, including a comparator (613) to compare the signal pattern on the control wires associated to each line and the control information in the area of the second memory assigned to the scanned line and a latch (616) connected to the output of the comparator in order to store the modem wire status change information which will be written into the area of the first memory assigned to the scanned line.

**Patentansprüche**

1. Zeilenabtastvorrichtung (7) dafür vorgesehen unter Kontrolle eines Mikroprozessors (1) zu arbeiten, der mit einem Steuerspeicher (2) zusammengeschaltet ist, in dem jeder Zeile eine Speicherpositionszone zugeordnet wird, während die Abtastvorrichtung und der Mikroprozessor als Teile eines Zeilenadapters (LA) ausgelegt sind für eine Datenübertragungssteuerung (CC), das serienmässige Meldebits von mit den genannten Zeilen verbundenen Datenendgeräten (T) empfängt oder ihnen diese Meldebits übersendet, wobei die genannte Abtastvorrichtung dadurch gekennzeichnet ist, dass sie die Kombination folgender Elemente beinhaltet:

ein erstes Einspeichermittel (306) mit einem ersten Speicher (B), in dem jeder Zeile eine Speicherpositionszone zugeteilt wird, wobei der genannte Speicher B der Bedienfunktion der Bits zugeordnet ist, und einen zweiten Speicher (C), in dem jeder Zeile eine Speicherpositionszone zugeteilt ist, wobei der genannte Speicher der Bedienfunktion der Zeilen zugeordnet ist, und die beiden Speicher (B und C) gleichzeitig gelesen und geschrieben werden können,

ein zweites Einspeichermittel (314) mit einem dritten Speicher (A), in dem jeder Zeile eine Speicherpositionszone zugeteilt wird, wobei der genannte Speicher der Bedienfunktion der Zeichen zugeordnet ist,

ein Kontroll- und Adressiermittel (303) mit einem ersten und einem zweiten, unter der Kontrolle eines Stellenzeitzählers (500) stehenden Adressenzähler (501 und 502), wobei der erste Zähler an seinem Ausgang während der Zeit «t», also während der Bitzeit des Abtastens einer Zeile, die Adresseninformation des ersten und des zweiten Speichers, jeweils (B und C), generiert und der zweite Zähler an seinem Ausgang während einer Zeit «nt», in der «n» zumindest gleich 4 ist, also einer Zeichenzeit entspricht, die Adresseninformation des dritten Speichers (A) generiert, während der erste Speicher (B) die für den dritten Speicher (A) bestimmten Adresseninformationen erhält und umgekehrt, dies jeweils zu spezifischen Zeiten, und Steuermittel (500, 503, 505) die die genannten Adresseninformationen und Informationen über die Stellenzeiten empfangen, um an den Ausgängen (324, 352) des Kontroll- und Adressiermittels zu Zeiten, die während der Abtastperioden gewählt wurden, die Adressen- und Steuerinformationen zum Lesen/Schreiben und sequentiell die Adressen der vorhandenen abgetasteten Zeilen zu liefern,

einen ersten logischen Verarbeitungs- und Überwachungsschaltkreis (308), der zu den Bitzeiten arbeitet und Deserialisierungs-/Serialisierungsmittel (617, 614) für die Bits umfasst, um zu jeder Abtastperiode ein Meldebit zu empfangen bzw. auszusenden, wobei dieser Schaltkreis einerseits mit den Zeilen (348) und andererseits über einen ersten Lesebus (310) und einen ersten Schreibebus (312) mit dem ersten Speicher (B) und mit dem zweiten Speicher (C) sowie über einen zweiten Schreibebus (322) mit dem dritten Speicher verbunden ist, so dass die in den adressierten Speicherpositionszonen des ersten und des zweiten Speichers abgelegten Informationen gelesen, verarbeitet und geändert oder nicht geändert neu geschrieben werden können, und zwar im Hinblick auf das empfangene oder zu übermittelnde Bit und derart, dass die vollständigen Zeichen, die mit Hilfe der von den Zeilen im ersten Speicher (B) erhaltenen Bits zusammengestellt wurden, dem dritten Speicher (A) übermittelt werden können,

einen zweiten logischen Verarbeitungs- und Überwachungsschaltkreis (316), der zu den Zeichenzeiten arbeitet und Mittel (723, 724, 714, 719, 726, 725) zum Zusammenstellen der Zeichen in halbe Wörter und zum Zerlegen der halben Wörter in einzelne Zeichen umfasst, einerseits über einen Adressenbus (17) und einen Datenbus (16) mit dem Steuerspeicher und andererseits über einen zweiten Lesebus (318) und einen dritten Schreibebus (320) mit dem dritten Speicher (A) verbunden sowie auch über den zweiten Schreibebus (322) am ersten Speicher (B) angeschlossen, um die Meldungen im Zyklusstehlen zwischen dem Steuerspeicher und den adressierten Zonen des ersten und des dritten Speichers auszutauschen.

2. Vorrichtung nach Anspruch 1, dadurch gekennzeichnet, dass jede Speicherpositionszone des ersten Speichers (B) zumindest ein nach Serialisierung im ersten logischen Schaltkreis empfangenes Zeichen, zumindest ein vor Serialisierung zu übermittelndes Zeichen sowie Informationen über die Übertragungsprüfung (SCF, PCF) und die Gleichlaufprüfung beinhaltet, und dass jede Speicherpositionszone des zweiten Speichers (C) Betriebsinformationen für die Zeilen und Zeichen, Kontrollinformationen (MOD EN, MOD SOR) und für die Zeile charakteristische Initialisierungsparameter beinhaltet.

3. Vorrichtung nach Anspruch 1 oder 2, dadurch gekennzeichnet, dass jede Speicherpositionszone des dritten Speichers (A) die Zeichen der Meldung enthält, die mit dem Steuerspeicher des Mikroprozessors auszutauschen sind, sowie auch Informationen zur Verwaltung der Übertragung (SCF), Steuerparameter für die Übertragung und die Adresseninformation (SA) der Zone des Mikroprozessorsteuerspeichers, die der Zeile zugeordnet ist.

4. Vorrichtung nach Anspruch 2 oder 3, dadurch gekennzeichnet, dass das genannte Steuer- und Adressiermittel eine Vielzahl von Registern (8) umfasst, die dem Mikroprozessor als externe Register dienen, wobei ein erstes Register als Zeilenadressenregister fungiert, dessen Inhalt mit Hilfe des Steuermittels, des Kontroll- und Adressiermittels derart zugeführt wird, dass der Mikroprozessor asynchron mit der Abtastvorrichtung verkehren kann.

5. Vorrichtung nach Anspruch 4, dadurch gekennzeichnet, dass:

das erste Register mit der Adresse einer Zeile geladen ist, ein zweites Register vom Mikroprozessor in asynchroner Betriebsart mit den Initialisierungsparametern geladen wird, die charakteristisch für die Zeile sind, deren Adresse im ersten Register gespeichert ist, um sequentiell den für die entsprechende Zeile charakteristischen Initialisierungsparameter in jeder Zone des zweiten Speichers (C) abzuspeichern.

6. Vorrichtung nach Anspruch 5, dadurch gekennzeichnet, dass jede Zone des dritten Speichers (A) eine Position enthält, die für das Abspeichern der auf Feststellung von Fehlern zurückzuführenden Unterbrechungsanforderungen vorgesehen ist, und

dass ein drittes externes Register ein Fehlerregister ist, in dem in asynchroner Betriebsart die Fehlerbedingung zum Melden an den Mikroprozessor abgespeichert werden kann.

7. Vorrichtung nach irgendeinem der vorangehenden Ansprüche, dadurch gekennzeichnet, dass :

jede Zeile eine Empfangs- und eine Sende-Schnittstelle beinhaltet, weswegen das Abtasten einer Zeile mit dem Abtasten der Empfangsschnittstelle beginnt und vom Abtasten der Sendeschnittstelle gefolgt wird, wobei die Speicherpositionszonen in jedem der Speicher Positionen enthalten, die den Empfangsschnittstellen zugeordnet sind, und Positionen, die den Sendeschnittstellen zugeordnet sind.

8. Vorrichtung nach Anspruch 7, dadurch gekennzeichnet, dass der zweite logische Schaltkreis Mittel umfasst, um die Zeit «nt» in fünf Arbeitsperioden zu teilen, und diese Mittel folgendes umfassen:

einen Phasenzähler (703), der an seinen vier Ausgängen zeitlich versetzte und die Periode «nt» überdeckende Impulse liefert,

eine Auslösekippschaltung (700), die angestossen wird, wenn die logische Schaltung bereit ist, auf einer neuen Schnittstelle zu arbeiten, sobald das Signal am ersten Ausgang des Zählers auf 1 gesetzt und die vorhergehende Abtastperiode beendet ist, und die an ihrem Ausgang (352) einen Auslöseimpuls erstellt.

9. Vorrichtung nach Anspruch 8, dadurch gekennzeichnet, dass die Steuermittel des Kontroll- und Adressiermittels folgendes umfassen:

den genannten Stellenzeitzähler (500), der von Impulsen des Taktgebers ausgehend an seinem Ausgang (512) Stellenzeitimpulse (S0 bis S6) generiert, welche die Abtastperiode überdecken,

ein Multiplexiergerät (505), das die Adresseninformationen des ersten und des zweiten Zählers und des ersten externen Registers empfängt sowie auch die Stellenzeitimpulse, um an seinen Ausgängen zu gewählten Zeiten die Adresse der Speicher des ersten Abspeichermittels und des Speichers des zweiten Abspeichermittels zu erstellen,

ein Steuermittel zum Lesen/Schreiben (503), das die Stellenimpulse und den Startimpuls erhält, der von der zweiten logischen Verarbeitungs- und Überwachungsschaltkreis generiert wird, um die Lese- und Schreibebefehle zu den gewählten Zeitpunkten zu erstellen, um die zur Verarbeitung der Meldungen erforderliche Operationen durchzuführen.

10. Vorrichtung nach einem der Ansprüche 7 bis 9, dadurch gekennzeichnet, dass der erste logische Schaltkreis folgendes umfasst:

Mittel, um die Synchronisierzeichen der empfangenen Meldungen zu suchen, bestehend aus:

einem Schieberegister (602), in welchem die empfangenen Bits am Anfang jeder Abtastperiode der Empfangsschnittstelle abgelagert werden, und dessen Inhalt am Ende des Abtastens im zweiten Speicher an einer Stelle neu geschrieben wird, die im Laufe der nächsten Abtastperiode gelesen und im genannten Register abgespeichert wird,

einem Vergleicher (613), um während jeder Abtastperiode den Inhalt des Schieberegisters mit der Synchronisierungsinformation in der Positionszone des ersten Speichers, der der abgetasteten Zeile zugeteilt ist, zu vergleichen,

Mitteln (643, 614) zum Feststellen der Gleichheit am Ausgang des Vergleichers, um in der Zone des ersten Speichers der der Zeile zugeteilt ist, in den Positionen zu schreiben, welche die Informationen zur Übertragungssteuerung enthalten, wobei ein Bit anzeigt, dass die Synchronisierung erreicht wurde.

11. Vorrichtung nach Anspruch 9 oder 10, dadurch gekennzeichnet, dass sie folgendes umfasst:

Mittel zur Verwaltung der Steuerader der Modems, welche die Schnittstelle zwischen den Datenendgeräten und der Abtastvorrichtung bilden, wobei diese Mittel einen Vergleicher (613) umfassen zum Vergleich der zu jeder Zeile gehörenden Signalkonfiguration auf den Steueradern mit den Kontrollinformationen in der der abgetasteten Zeile zugeteilten Zone des zweiten Speichers, und eine mit dem Ausgang des Vergleichers verbundene Kippschaltung (616), um die Information über die Statusänderung der Modem-Leitungen abzuspeichern, die in der der abgetasteten Zeile zugeteilten Zone des ersten Speichers zu schreiben ist.

FIG.1

# FIG.2

FIG.3

# FIG.4

LIC 0 LIC 1 LIC 2 LIC 3 LIC 4 LIC 5 LIC 6 LIC 7

# FIG.5

LIC 0 LIC 1 LIC 2 LIC 3 LIC 4 LIC 5

UNE SEULE LIGNE

UNE SEULE LIGNE

FIG.6

FIG.7

* TEMPS D'ACCES ASYNCHRONE

FIG.8

COMPTEUR 501

ADR. DE CARTE LIC

LIC 1 LIGNE 546

ADR. LIGNE
SUR LA CARTE

557 558 559

| LIC 0 | 1 | X | X | X | X | X | X | X |
| LIC 1 | X | 1 | X | X | X | X | X | X |
| LIC 2 | X | X | 1 | X | X | X | X | X |
| LIC 3 | X | X | X | 1 | X | X | X | X |
| LIC 4 | X | X | X | X | 1 | X | X | X |
| LIC 5 | X | X | X | X | X | 1 | X | X |
| LIC 6 | X | X | X | X | X | X | 1 | X |
| LIC 7 | X | X | X | X | X | X | X | 1 |
| C0 | 0 | 0 | 0 | 0 | 1 | 1 | 1 | 1 |
| C1 | 0 | 0 | 1 | 1 | 0 | 0 | 1 | 1 |
| C2 | 0 | 1 | 0 | 1 | 0 | 1 | 0 | 1 |

552 553

CARTE 1
LIGNE
BAL.

547

S6 530 EMI 534

C2 C1 C0 532

LSB RAZ

MSB

INV 551

549 550

A A

540

541

BIT 2 538

555

L1 L0 543

575

0 EX

BIT 1 537

EMI A
S6

565

A MISE à 1
564

EMI
S6

576

0 EX

BIT 0 0 526

567

566

A RAZ
562

560

564

0 EX 577

PARITE
PREDITE

LIC
PRESENT 1 2 3 4 5 6 7

569

INV

570

INV

568

A

CHANG. D'ETAT
563

C2 573

C1 INV A

EMI

571 574 S6

FIG.9

49

0 077 863

FIG. 10

FIG.11

FIG.12

FIG. 13

FIG.14

FIG. 15A

FIG.15

# FIG.15B